# EUROPEAN PATENT SPECIFICATION

(11) **EP 2 180 333 B1**
(45) Date of publication and mention of the grant of the patent: **01.03.2017**
(21) Application number: 09013373.7
(22) Date of filing: 22.10.2009
(51) Int. Cl.: B60R 25/102, G01S 19/16, H01Q 1/32

(54) **Motorcycle**
Motorrad
Motocyclette

(30) Priority: 24.10.2008 JP 2008274890; 17.09.2009 JP 2009215240
(43) Date of publication of application: 28.04.2010
(73) Proprietor: Yamaha Hatsudoki Kabushiki Kaisha, Shizuoka-ken Shizuoka 438-8501 (JP)
(72) Inventor: Morishita, Kensuke, Iwata-shi Shizuoka-ken 438-8501 (JP); Ogai, Takashi, Iwata-shi Shizuoka-ken 438-8501 (JP); Okada, Takeshi, Iwata-shi Shizuoka-ken 438-8501 (JP); Ozawa, Toshiaki, Iwata-shi Shizuoka-ken 438-8501 (JP); Kouda, Takurou, Iwata-shi Shizuoka-ken 438-0026 (JP)
(74) Representative: Grünecker Patent- und Rechtsanwälte PartG mbB

(56) References cited:
- EP-A- 1 081 035
- EP-A- 1 225 107
- EP-A- 1 247 706
- EP-A- 1 950 458
- JP-A- 2001 027 647
- US-A1- 2004 203 564
- US-A1- 2008 185 209
- US-A1- 2008 223 642
- US-A1- 2008 223 647

## Description

The present invention relates to a motorcycle according to the preamble part of claim 1. In particular, the present invention relates to a motorcycle equipped with a Global Positioning System (GPS).

Motorcycles equipped with anti-theft devices have been known. The anti-theft device receives GPS signals and can determine the present location of the motorcycle equipped with the anti-theft device.

The motorcycle disclosed by JP 2002-362448 A is equipped with an anti-theft unit including a GPS device. In the motorcycle disclosed by JP 2002-362448 A, the anti-theft unit is provided at the bottom or a side of a storage box provided under the seat.

An anti-theft unit is desirably provided in a position that is not easily accessible, so that the unit is not easily removed if the vehicle is stolen. In the motorcycle disclosed by JP 2002-362448 A, the anti-theft device is provided under the seat and at the bottom or a side of the storage box that is opened/closed by a lockable seat. In this way, easy access to the anti-theft device is prohibited.

However, when the anti-theft unit is provided under the seat as in the motorcycle disclosed by JP 2002-362448 A, the metal frame may degrade the receiving sensitivity to GPS signals.

US 2008/0223642 A1 discloses a motorcycle readable on the preamble part of claim 1.

It is an objective of the present invention to provide a motorcycle whose anti-theft unit can be hardly accessible, while at the same time sufficient receiving sensitivity to GPS signals and the size of the frame of the motorcycle can be maintained.

According to the present invention, said objective is solved by a motorcycle having the combination of features of independent claim 1.

In order to reduce the degradation in the receiving sensitivity to GPS signals, the anti-theft device is desirably provided in a position equal to or higher than the frame. When the anti-theft unit is provided under the seat and in a position equal to or higher than the frame, the seat height can be raised in order to provide the anti-theft device.

Moreover, in the motorcycle equipped with the unit including the GPS antenna, respectively the anti-theft unit, the anti-theft unit can be provided in a hardly accessible position while reducing degradation in the receiving sensitivity to GPS signals and without increasing the size of the frame.

Further, preferably the seat comprises a supported portion supported by contacting the frame, and one of the fixing portion and the supported portion is positioned in front of the unit and the other is positioned behind the unit.

Still further, preferably the seat comprises a supported portion supported by contacting the frame, and the supported portion overlaps the unit in the front-back direction of the motorcycle.

Yet further still, preferably the seat comprises a supported portion supported by contacting the frame, and the supported portion overlaps the unit in a vertical direction of the motorcycle.

According to a preferred embodiment, the frame comprises a coupling frame extending in crosswise direction of the motorcycle and coupling the side frames.

Preferably, the seat attachment portion is provided at the coupling frame.

Further, preferably the unit overlaps the seat attachment portion in the front-back direction of the motorcycle.

Still further, preferably the unit overlaps the seat attachment portion in a crosswise direction of the motorcycle.

Yet further still, preferably the unit overlaps the seat attachment portion in a vertical direction of the motorcycle.

According to another preferred embodiment, a rear wheel is provided under the unit, and a body cover is provided between the rear wheel and the unit and has a lower end extending backward and upward when seen in a side view.

Preferably, the unit and the seat overlap each other when seen in a side view.

In the following, the present invention is explained in greater detail by means of embodiments thereof in conjunction with the accompanying drawings, wherein:
Fig. 1 is a system diagram of an anti-theft system.
Fig. 2 is a side view of an entire motorcycle according to a first preferred embodiment.
Fig. 3 is a plan view of the entire motorcycle according to the first preferred embodiment.
Fig. 4 is a plan view of a rear part of the motorcycle according to the first preferred embodiment.
Fig. 5 is a side view of the rear part of the motorcycle according to the first preferred embodiment.
Fig. 6 is a side sectional view of the rear part of the motorcycle according to the first preferred embodiment.
Fig. 7 is a front sectional view of the rear part of the motorcycle according to the first preferred embodiment.
Fig. 8 is a rear sectional view of the rear part of the motorcycle according to the first preferred embodiment.
Fig. 9 is a side view of an entire motorcycle according to a second preferred embodiment.
Fig. 10 is a plan view of the entire motorcycle according to the second preferred embodiment.
Fig. 11 is a plan view of a frame in the motorcycle according to the second preferred embodiment.
Fig. 12 is a side view of the frame in the motorcycle according to the second preferred embodiment.
Fig. 13 is a side view of a seat in the motorcycle according to the second preferred embodiment.
Fig. 14 is a bottom view of the motorcycle according to the second preferred embodiment.
Figs. 15 and 16 are plan views of a rear part of the motorcycle according to the second preferred embodiment.
Fig. 17 is a side view of the rear part of the motorcycle according to the second preferred embodiment.
Fig. 18 is a side sectional view of the rear part of the motorcycle according to the second preferred embodiment.
Fig. 19 is a front sectional view of the rear part of the motorcycle according to the second preferred embodiment.
Fig. 20 is a side view of an entire motorcycle according to a third preferred embodiment.
Fig. 21 is a plan view of the entire motorcycle according to the third preferred embodiment.
Fig. 22 is a plan view of a rear part of the motorcycle according to the third preferred embodiment.
Fig. 23 is a side view of the rear part of the motorcycle according to the third preferred embodiment.
Fig. 24 is a perspective view of a seat in the motorcycle according to the third preferred embodiment.
Fig. 25 is a bottom perspective view of the seat in the motorcycle according to the third preferred embodiment.
Fig. 26 is a side view of the rear part of the motorcycle according to the third preferred embodiment.
Fig. 27 is a side view of an entire motorcycle according to a fourth preferred embodiment.
Fig. 28 is a perspective view of a frame and an anti-theft unit in the motorcycle according to the fourth preferred embodiment.
Fig. 29 is a plan view of a seat in the motorcycle according to the fourth preferred embodiment.
Fig. 30 is a plan view of the lower part structure of the seat in the motorcycle according to the fourth preferred embodiment.
Fig. 31 is a side view of the central part of the frame in the motorcycle according to the fourth preferred embodiment.
Fig. 32 is an enlarged view of the part denoted by the arrow D in Fig. 28.
Figs. 33 to 36 are views showing the attachment structure for a main seat in the motorcycle according to the fourth preferred embodiment.
Fig. 37 is a side sectional view showing the attachment position of the anti-theft unit in the motorcycle according to the fourth preferred embodiment.

It has been studied from various points of view about where to provide an anti-theft unit in a motorcycle so that easy access to the unit is prohibited.

The seat is fixed to the frame so that it can be opened/closed. The space under the seat is hardly accessible. It has been considered about making use of the space under the seat for providing the anti-theft unit. However, the seat is provided above the frame, and it was found that the presence of the metal frame above the anti-theft unit degrades the receiving sensitivity to GPS signals. It has been then considered providing the anti-theft unit in a position equal to or higher than the frame in the space under the seat in order to prevent the degradation in the receiving sensitivity to GPS signals.

When the anti-theft unit is provided in a position equal to or higher than the frame in the space under the seat, interference with the seat can be a problem. A part of the seat is attached to a seat attachment portion provided at the frame. When a rider is seated, the rider's weight bends the seat downward. When the anti-theft unit is provided in a position equal to or higher than the frame in the space under the seat, a large distance should be secured between the anti-theft unit and the bottom part of the seat. If a large distance is secured, the vehicle is increased in size. It has been realized that the degree of the bending of the seat increases in positions away from the seat attachment portion. Stated differently, it has been realized that in positions nearer to the seat attachment portion, the degree of bending of the seat is smaller and the distance between the GPS unit and the bottom part of the seat can be smaller.

As in the foregoing, it has been found the arrangement in which the anti-theft unit can be provided in a hardly accessible place without increasing the size of the vehicle while reducing degradation in the receiving sensitivity to GPS signals in a motorcycle. Now, preferred embodiments will be described in conjunction with the accompanying drawings.

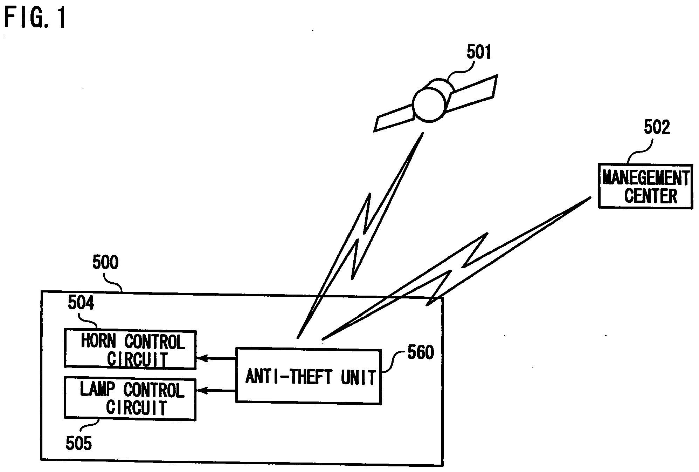

Fig. 1 is a diagram of an entire anti-theft system according to a preferred embodiment. The anti-theft system includes an anti-theft unit 560 provided in a motorcycle 500, a Global Positioning System (GPS) satellite 501, and a management center 502.

The mechanism of the anti-theft system will be described. The anti-theft unit 560 in the motorcycle 500 having a GPS receiving function receives signals transmitted from the GPS satellite 501 and can measure the present location of the anti-theft unit 560. The anti-theft unit 560 is provided in the motorcycle 500, and therefore the present location of the motorcycle 500 can be measured. The "unit", respectively GPS unit, according to the present teaching corresponds to the anti-theft unit 560 according to the present preferred embodiment.

The anti-theft unit 560 has a radio communication function and can transmit the present positional information of the motorcycle 500 to the management center 502 by radio communication. According to the present preferred embodiment, GSM (Global System for Mobile Communication) is used as the radio communication.

When the motorcycle 500 is stolen, the rider of the motorcycle 500 immediately informs the management center 502 of the fact by telephone or the like. The management center 502 obtains positional information transmitted from the anti-theft unit 560 provided in the motorcycle 500 and discovers the stolen vehicle.

The anti-theft unit 560 is connected to a horn control circuit 504 used to activate a horn and a lamp control circuit 505 used to flash a lamp.

Upon obtaining information about the theft of the motorcycle 500, the management center 502 transmits an alarm command to the anti-theft unit 560 if necessary. The anti-theft unit 560 can control the horn control circuit 504 in response to the alarm command and activate the horn. Alternatively, the anti-theft unit 560 can control the lamp control circuit 505 in response to the alarm command and flash the lamp.

The structure of the anti-theft system described above is common among first to fourth preferred embodiments. The motorcycle 500 described above is replaced by the motorcycles 100, 200, 300, and 400 in the first to fourth preferred embodiments, respectively. In the first to fourth preferred embodiments in the following description, the above-described anti-theft unit 560 is replaced by anti-theft units, respectively GPS units, 160, 260, 360, and 460, respectively.

In the following description of the first to fourth preferred embodiments, directions such as front, back, right and left directions refer to these directions with respect to the advancing direction of the vehicle unless otherwise specified. More specifically, in the following description, the forward direction viewed from a rider seated on the seat refers to the forward direction of the motorcycle, and the right and left direction viewed from a rider seated on the seat refers to the right and left direction of the motorcycle.

### First Preferred Embodiment

Now, the structure of a motorcycle 100 according to a first preferred embodiment will be described in conjunction with the accompanying drawings.

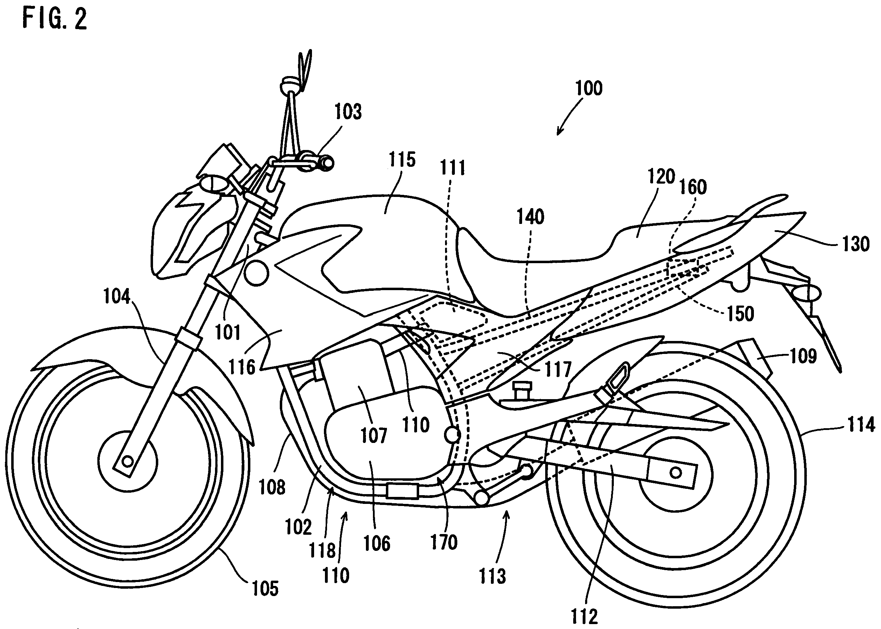

Fig. 2 is a side view of the entire motorcycle 100 according to the first preferred embodiment. The motorcycle 100 includes a cradle type main frame 102. An engine 170 is provided in the main frame 102. The main frame 102 surrounds the top, bottom, front and rear of the engine 170 when seen in a side view.

A head pipe 101 is provided at the front part of the main frame 102. A steering shaft is rotatably attached to the head pipe 101. A handle 103 is attached to the upper end of the steering shaft. A front fork 104 is provided on the right and left sides of the steering shaft. The front fork 104 rotates together with the steering shaft in the horizontal direction. A front wheel 105 is rotatably provided at the lower end of the front fork 104.

A fuel tank 115 is provided above the main frame 102. A seat 120 is provided behind the fuel tank 115. A rear cover 130 is provided under the seat 120. The rear cover 130 is positioned above the rear wheel 114.

A pair of right and left side frames 140 is provided near the upper part of the main frame 102. The side frames 140 extend upward toward the back of the vehicle. The side frames 140 extend near the rear end of the seat 120. The side frames 140 support the seat 120, the rear cover 130 and the like.

In the main frame 102, a pair of right and left support frames 150 is attached in a position lower than the attachment position of the side frames 140. The support frames 150 extend upward to the back of the vehicle. The rear ends of the support frames 150 are connected to the side frames 140 and thus support the side frames 140.

The main frame 102, the side frames 140 and the support frames 150 are all metal frames. The main frame 102, the side frames 140, the support frames 150 and a coupling frame 141 that will be described form the frame 118 of the motorcycle 100.

A rear arm 112 is attached to the rear part of the main frame 102 so that it can rotate in the vertical direction. The rear wheel 114 is rotatably attached to the rear end of the rear arm 112. The rear arm 112 and the frame 118 are connected to each other by a rear cushion member 113. The rear arm 112 is attached rotatably around a shaft provided at the frame 118 near the rear part of the crankcase 106 of the engine 170. The rear arm 112 may be attached so that it can rotate around the output shaft of the rear part of the crankcase 106 of the engine 170.

The engine 170 includes the crankcase 106 and a cylinder 107 positioned above the crankcase 106. An intake path 110 is connected to the rear part of the cylinder 107. The intake path 110 extends backward from the rear part of the cylinder 107. An air cleaner 111 is connected to the rear part of the intake path 110. An exhaust path 108 is connected to the front part of the cylinder 107. The exhaust path 108 extends downward from the front part of the cylinder 107 and then backward along the bottom of the body. The rear end of the exhaust path 108 is connected with a muffler 109.

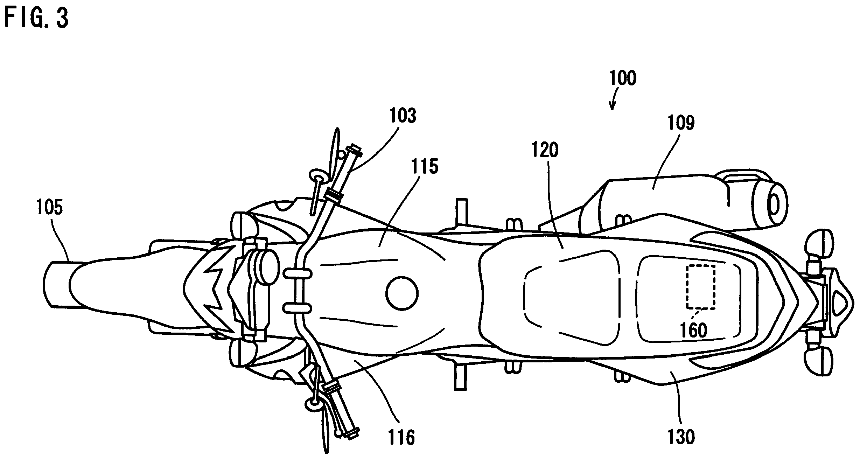

Fig. 3 is a plan view of the motorcycle 100. As shown in Fig. 3, the seat 120 extends from the vicinity of the center of the body to the back and the rear cover 130 is provided behind the seat 120. The rear cover 130 is provided above the rear wheel 114 to cover the space under the seat 120. As will be described in detail, an anti-theft unit 160 according to the present preferred embodiment is provided under the seat 120.

Referring back to Fig. 2, a pair of right and left front covers 116 is provided on the left and right of the fuel tank 115. The front covers 116 extend downward from the lower part of the fuel tank 115. A pair of right and left side covers 117 is attached on the right and left of the seat 120. The side covers 117 are provided under the seat 120. The rear cover 130 is provided at the rear part of the side covers 117 on the right and left sides of the seat 120.

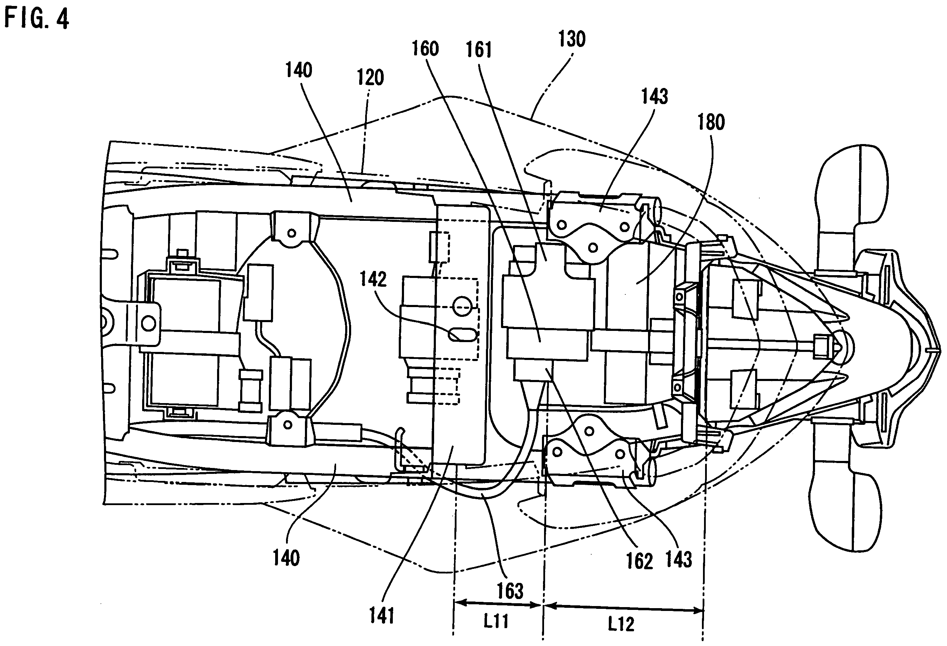

Fig. 4 is a plan view of the rear part of the motorcycle 100. In Fig. 4, only the outer shape line of the seat 120 is drawn, and the structure under the seat 120 can be seen. The anti-theft unit 160 is provided under the seat 120. The anti-theft unit 160 is provided between the right and left side frames 140 when seen in a plan view. The anti-theft unit 160 has a rectangular parallelepiped shape and has its periphery covered with a protection cover 161. A cable 163 includes from the left side of the anti-theft unit 160 through a connector 162. The cable 163 stores a power supply line or a signal line.

A tool case 180 is stored in the rear part of the anti-theft unit 160. The tool case 180 is a tubular case that can be stored in the crosswise direction of the vehicle.

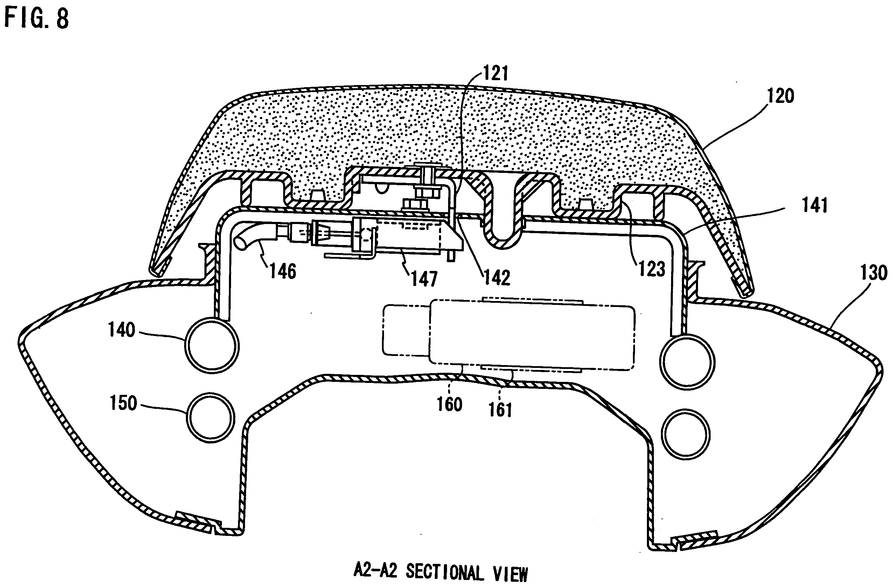

The coupling frame 141 is provided in front of the anti-theft device 160. The coupling frame 141 is used to couple the right and left side frames 140. A seat attachment hole 142 is provided about in the center of the coupling frame 141. The seat attachment hole 142 according to the present preferred embodiment corresponds to the "seat attachment portion" according to the present teaching. A fixing member 121 provided at the lower part of the seat 120 shown in Fig. 8 is inserted into the seat attachment hole 142. The fixing member 121 according to the present preferred embodiment corresponds to the "fixing portion" according to the present teaching.

The reference character L11 in Fig. 4 indicates the distance from the seat attachment hole 142 as "seat attachment portion" to the anti-theft unit 160 in the front-back direction of the vehicle. The reference character L12 indicates the distance from the rear end of the seat 120 to the anti-theft unit 160 in the front-back direction of the vehicle. The position of the anti-theft unit 160 refers to the position about in the center of the anti-theft unit 160 in the front-back direction.

According to the present preferred embodiment, the distance L11 is shorter than the distance L12. More specifically, with respect to the front-back direction of the vehicle, the anti-theft unit 160 is provided more on the front side than the intermediate position between the position of the seat attachment hole 142 and the rear end position of the seat 120. In this way, when a rider gets on the vehicle and the seat 120 is bent, the degree of the bending of the seat 120 above the anti-theft unit 160 is small. In this way, the anti-theft unit 160 can be provided near the bottom of the seat 120. The space between the anti-theft unit 160 and the bottom of the seat 120 is small, which can make it difficult to access the anti-theft unit 160.

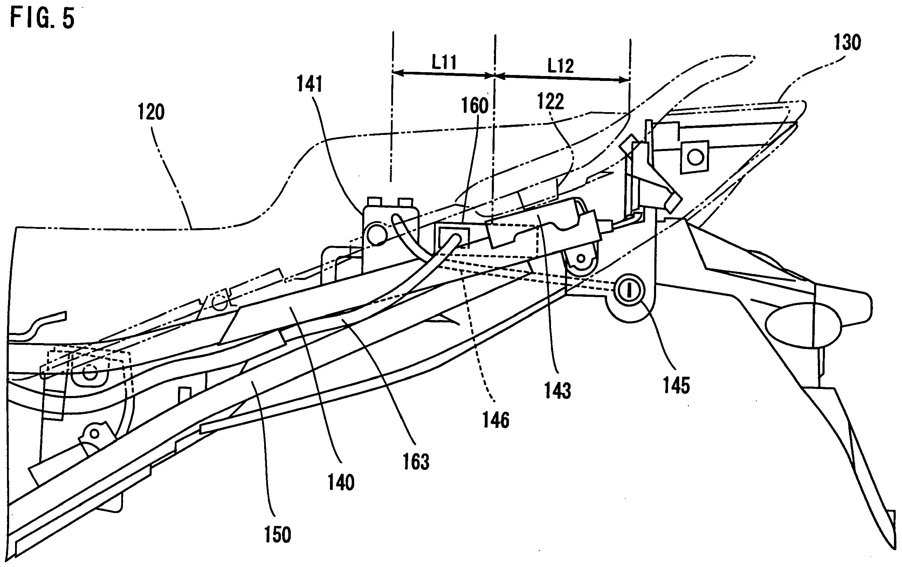

Fig. 5 is a side view of the rear part of the motorcycle 100. In Fig. 5, only the outer shapes of the seat 120 and the rear cover 130 are shown and the structure under the seat 120 can be seen.

The anti-theft unit 160 has an approximately rectangular parallelepiped shape. The anti-theft unit 160 is provided so that its area when seen in a top view is greater than in a side view. Stated differently, the anti-theft unit 160 is provided to be thin in the vertical direction. In other words, the anti-theft unit 160 is provided so that the size in the vertical direction is smaller than the size in the crosswise and front-back directions. When the anti-theft unit 160 is provided, the height of the vehicle is not raised.

The anti-theft unit 160 is provided so that its upper surface or bottom surface is approximately horizontal. In this way, the height of the vehicle is not raised even though the anti-theft unit 160 is provided in a narrow region in the vertical direction defined by the seat 120 and the rear cover 130.

The anti-theft unit 160 is provided in a position overlapping the side frames 140 when seen in a side view. This can make it difficult to access the anti-theft unit 160 from the right and left sides. The anti-theft unit 160 can be protected from the right and left sides. When the anti-theft unit 160 is provided under the metal frames, the receiving sensitivity to GPS signals is degraded. The anti-theft unit 160 is provided on the lateral side of the side frames 140, so that the degradation in the receiving sensitivity to GPS signals can be reduced. The anti-theft unit 160 is provided in a position overlapping the rear part of the side frames 140 that extend backward and upward when seen in a side view. Stated differently, the anti-theft unit 160 is provided in a position overlapping the upper part of the side frames 140 that extend backward and upward when seen in a side view. The part of the side frames 140 positioned above the anti-theft unit 160 is small, so that the degradation in the receiving sensitivity to GPS signals can be reduced.

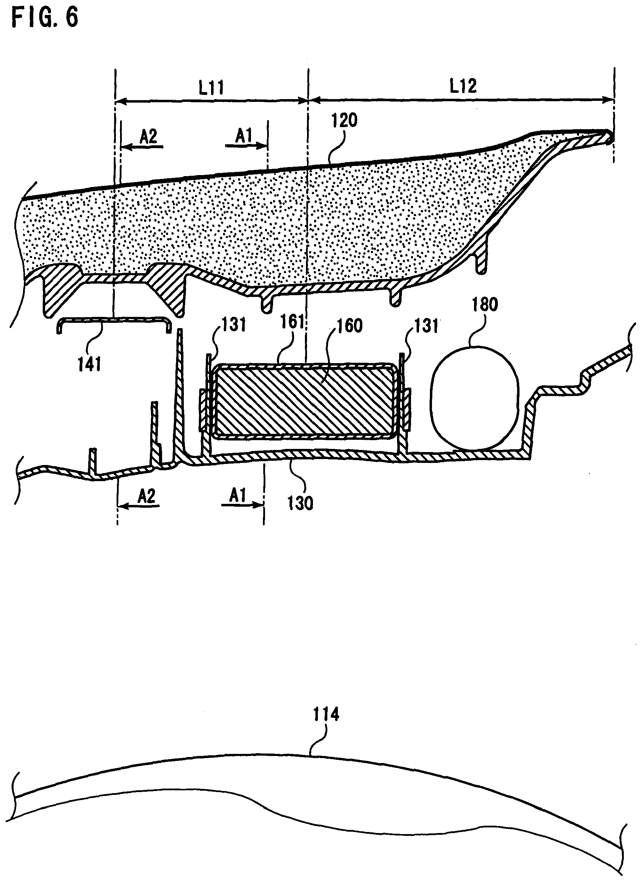

Fig. 6 is a side sectional view showing the attachment structure for the anti-theft unit 160. The rear cover 130 is provided with front and rear, two fixing plates 131 that extend upward. The protection cover 161 is fixed to the fixing plates 131, so that the anti-theft unit 160 is fixed.

In order to avoid interference with the rear wheel 114, the seat 120 and the rear cover 130 are provided adjacent to each other in the vertical direction. The anti-theft unit 160 is provided near the seat 120. When the anti-theft unit 160 is near the seat 120 and the seat 120 is bent, the unit may interfere with the seat 120. As described above, the anti-theft unit 160 is provided so that the distance L11 is shorter than the distance L12. The anti-theft unit 160 is provided nearer to the side provided with the seat attachment hole 142 than the rear end of the seat 120. When the seat 120 is bent, the anti-theft unit 160 and the seat 120 do not interfere with each other.

In addition, the position of the anti-theft unit 160 overlaps the seat attachment hole 142 with respect to the crosswise direction of the vehicle. Since the seat attachment hole 142 and the anti-theft unit 160 are provided close to each other with respect to the crosswise direction of the vehicle, it is difficult to access the anti-theft unit 160 by holding up the seat 120 as the seat 120 is attached to the body frame. This makes it more difficult to access the anti-theft unit 160.

Since the anti-theft unit 160 is provided near the seat attachment hole 142, the anti-theft unit can be provided in a position where the degree of the bending of the seat 120 is small. The anti-theft unit 160 can be provided even if the space under the seat 120 is small. Furthermore, it is difficult to access the anti-theft unit 160 by holding up the seat 120 as the seat 120 is attached to the body frame. This makes it difficult to access the anti-theft unit 160. Access to the anti-theft unit 160 can be made difficult in this way.

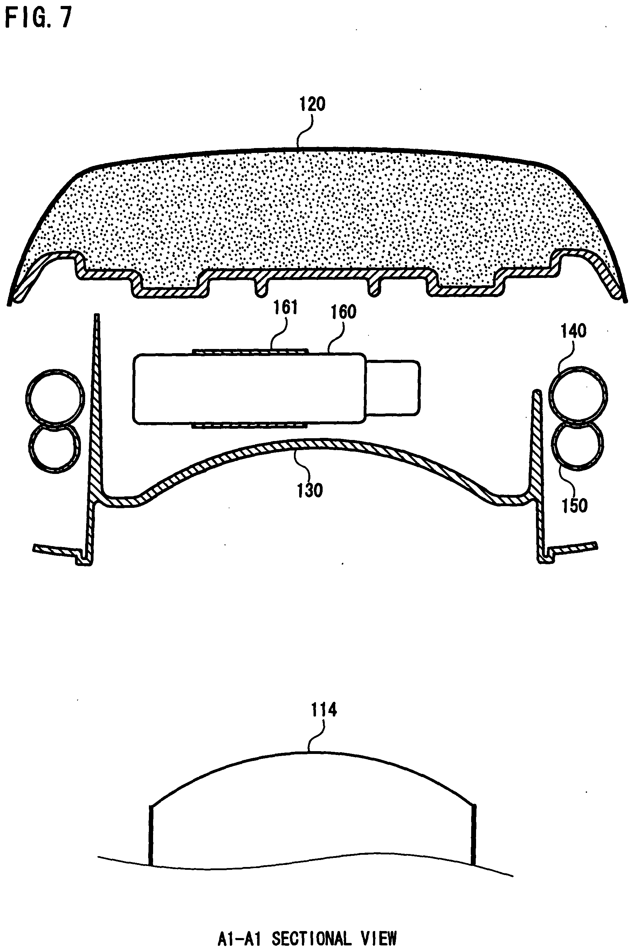

Fig. 7 is a front sectional view showing the attachment structure for the anti-theft unit 160. Fig. 7 is a sectional view taken along A1-A1 indicated in Fig.6. As can be seen, the anti-theft unit 160 is provided between the right and left side frames 140. Access to the anti-theft unit 160 is made difficult by the right and left side walls of the rear cover 130 in addition to the side frames 140. As can be seen from Fig. 7, in order to keep the height of the seat 120 from being raised while a large moving range is secured for the rear wheel 114 that moves in the vertical direction together with the rear arm 112, the bottom surface of the rear cover 130 is raised in the center of the vehicle than on the right and left sides of the vehicle. The anti-theft unit 160 is positioned above the upper end of the bottom surface of the rear cover 130 in a front sectional view. Therefore, the anti-theft unit 160 is positioned near the seat 120.

Fig. 8 is a rear sectional view showing the attachment structure for the anti-theft unit 160. Fig. 8 is a sectional view taken along A2-A2 indicated in Fig.6. The fixing member 121 for the seat 120 is inserted into the seat attachment hole 142 of the coupling frame 141. A lock member 147 is provided under the coupling frame 141. The lock member 147 can fix the fixing member 121 inserted from the seat attachment hole 142. The lock member 147 is connected with a wire 146. As shown in Fig. 5, the wire 146 is connected to a key box 145. The main key of the vehicle is inserted to the key box 145 and the main key is rotated to operate the lock member 147, so that the fixing member 121 is fixed. In this way, the seat 120 is locked.

Referring back to Fig. 4, the support plates 143 are attached to the rear ends of the side frames 140. Supported portions 122(see Fig. 5) provided under the seat 120 are in contact with the support plates 143. At the support plates 143, the load of the seat 120 and a rider seated on the seat 120 is received.

The seat attachment hole 142 that serves as the "seat attachment portion" is positioned in front of the anti-theft unit 160. The supported portions 122 of the seat 120 are positioned behind the anti-theft unit 160. In this way, the seat attachment portion and the supported portions are positioned in front of and behind the anti-theft unit 160, so that the seat 120 and the anti-theft unit 160 do not interfere with each other if the seat 120 is bent.

The right and left supported portions 122 are provided opposed to the right and left support plates 143. More specifically, the supported portions 122 are provided on the right and left sides of the anti-theft unit 160. When the seat 120 is bent, the seat 120 and the anti-theft unit 160 can be prevented from interfering with each other. The supported portions 122 are provided in positions overlapping the anti-theft unit 160 with respect to the front-back direction of the vehicle. Since the anti-theft unit 160 and the supported portions 122 are provided close to each other in the front-back direction, so that the seat 120 and the anti-theft unit 160 can be prevented from interfering with each other when a load is applied on the seat 120.

As shown in Fig. 8, the coupling frame 141 also serves as a support plate that receives the load of the seat 120. As shown, supported portions 123 are provided under the seat 120. The supported portions 123 receive the load as they are in contact with the upper surface of the coupling frame 141.

### Second Preferred Embodiment

Now, a motorcycle 200 according to a second preferred embodiment will be described in conjunction with the accompanying drawings.

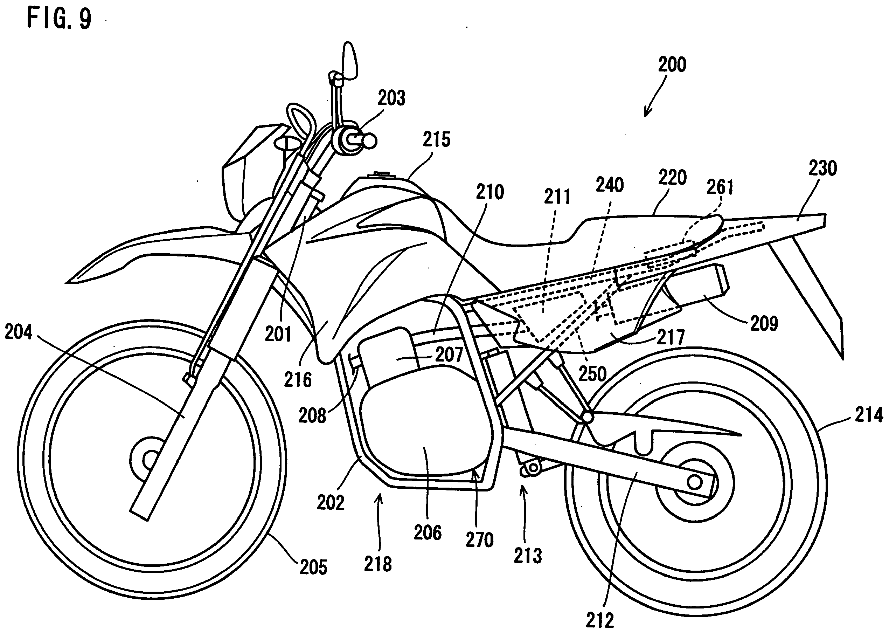

Fig. 9 is a side view of the entire motorcycle 200 according to the second preferred embodiment . The motorcycle 200 includes a cradle type main frame 202 in the center of the vehicle. An engine 270 is provided in the main frame 202. The main frame 202 surrounds the top, bottom, front and rear of the engine 270 when seen in a side view.

A head pipe 201 is provided at the front of the main frame 202. A steering shaft is rotatably attached to the head pipe 201. A handle 203 is attached to the upper end of the steering shaft. A front fork 204 is provided on the right and left sides of the steering shaft. The front fork 204 rotates together with the steering shaft in the horizontal direction. A front wheel 205 is rotatably provided at the lower end of the front fork 204.

A fuel tank 215 is provided above the main frame 202. A seat 220 is provided behind the fuel tank 215. A rear cover 230 is provided behind the seat 220. The rear cover 230 is positioned above the rear wheel 214 and extends under the seat.

A pair of right and left side frames 240 is provided near the upper part of the main frame 202. The side frames 240 extend upward to the back of the vehicle. The side frames 240 extend behind the rear end of the seat 120. The side frames 240 support the seat 220, the rear cover 230 and the like.

A pair of right and left support frames 250 is attached in a position lower than the attachment position of the side frames 240. The support frames 250 extend upward to the back of the vehicle. The rear ends of the support frames 250 are connected to the side frames 240 and thus support the side frames 240.

The main frame 202, the side frames 240, and the support frames 250 are all metal frames. The main frame 202, the side frames 240, the support frames 250 and a coupling frame 241 that will be described form frame 218 of the motorcycle 200.

A rear arm 212 is attached to the rear part of the main frame 202 so that it can rotate in the vertical direction. A rear wheel 214 is rotatably attached to the rear end of the rear arm 212. The rear arm 212 and the frame 218 are connected to each other by a rear cushion member 213. The rear arm 212 is attached rotatably around a shaft provided at the frame 218 near the rear part of the crankcase 206 of the engine 270. The rear arm 212 may be attached so that it can rotate around the output shaft of the rear part of the crankcase 206 of the engine 270.

The engine 270 includes the crankcase 206 and a cylinder 207 positioned above the crankcase 206. An intake path 210 is connected to the rear part of the cylinder 207. The intake path 210 extends backward from the rear part of the cylinder 207. An air cleaner 211 is connected to the rear end of the intake path 210. An exhaust path 208 is connected to the front part of the cylinder 207. The exhaust path 208 extends forward from the front part of the cylinder 207 and then backward along the side of the cylinder 207. The rear end of the exhaust path 208 is connected with a muffler 209.

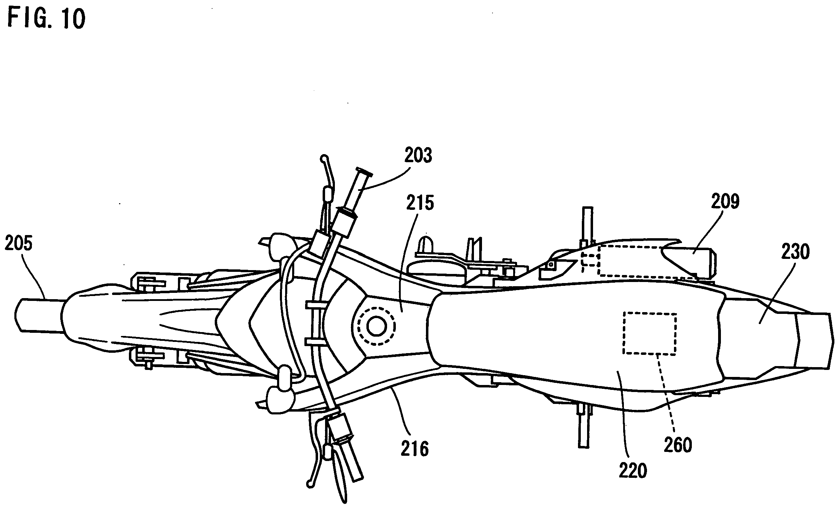

Fig. 10 is a plan view of the motorcycle 200. As shown in Fig. 10, the seat 220 extends from the vicinity of the center of the body to the back and a rear cover 230 is provided behind the seat 220. The rear cover 230 is provided to cover the rear wheel 214 from above. As will be described in detail, an anti-theft unit 260 according to the present preferred embodiment is provided above the rear cover 230.

Referring back to Fig. 9, a pair of right and left front covers 216 is provided on the left and right of the fuel tank 215. The front covers 216 extend downward from the lower part of the fuel tank 215. A pair of right and left side covers 217 is attached on the left and right of the seat 220. The side covers 217 are provided under the seat 220.

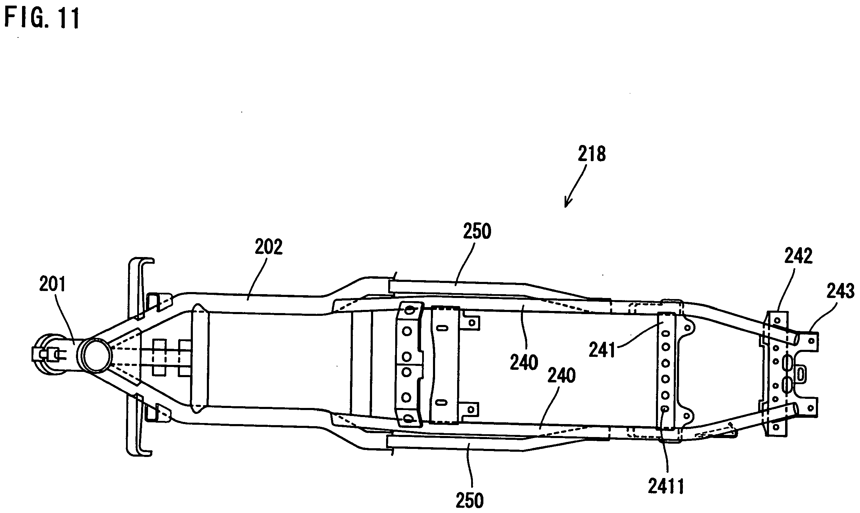

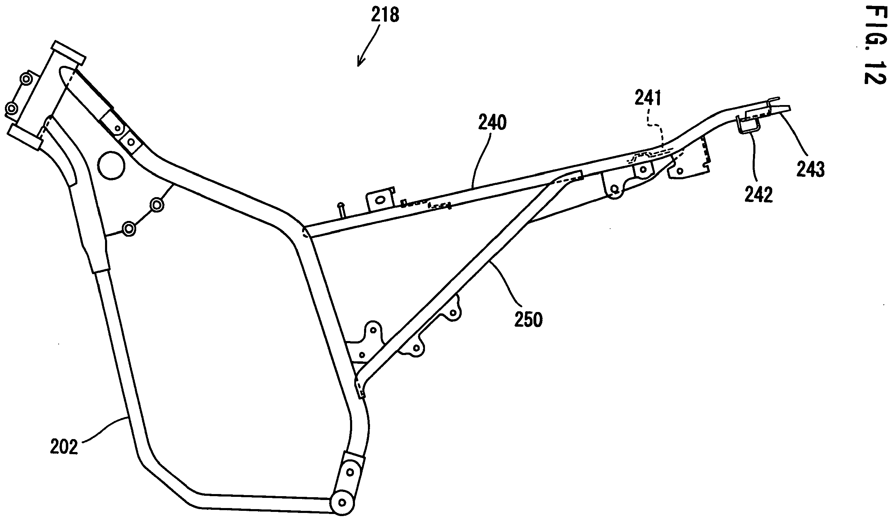

Fig. 11 is a plan view of the frame 218. Fig. 12 is a side view of the frame 218. As shown in Fig. 11, a coupling frame 241 used to couple the right and left side frames 240 are provided at the rear parts of the side frames 240. A seat attachment hole 2411 used to attach the seat 220 is provided at the coupling frame 241. The seat attachment hole 2411 according to the present preferred embodiment corresponds to the "seat attachment portion" according to the present teaching.

Two coupling frames 242 and 243 used to couple the right and left side frames 240 are provided at the rear ends of the side frames 240. As shown in Fig. 12, the coupling frame 243 is held between the side frames 240 and the coupling frame 242 in the vertical direction.

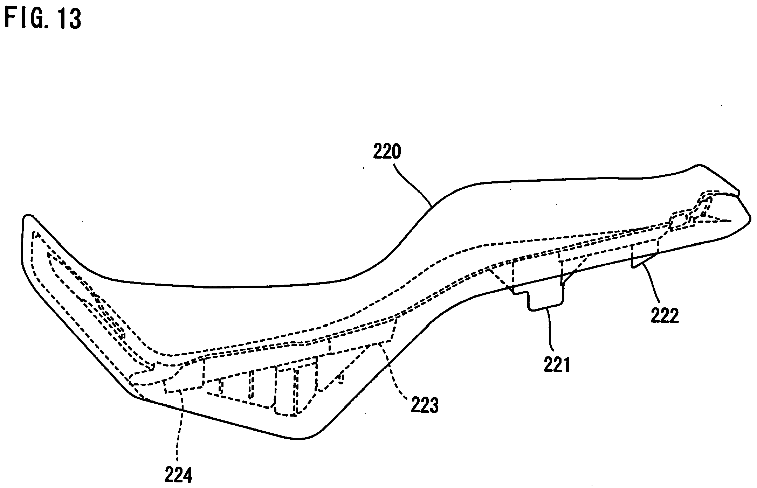

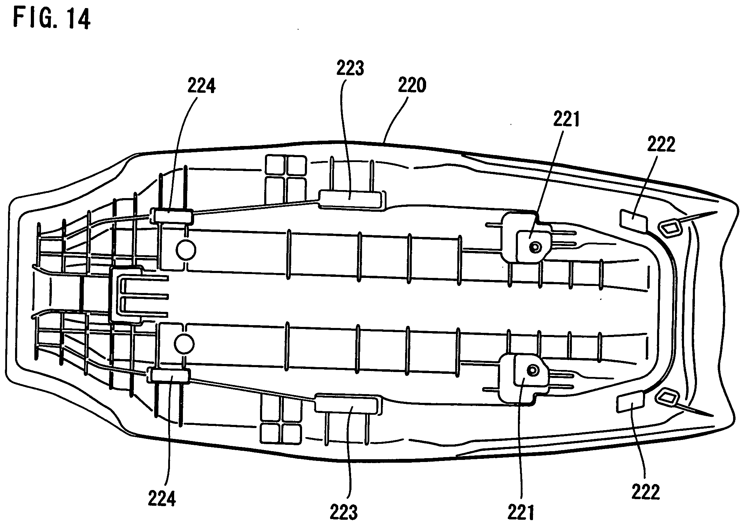

Fig. 13 is a side view of the seat 220. Fig. 14 is a bottom view of the seat 220. A pair of attachment portions 221 used to attach the seat 220 to the coupling frame 241 is provided at the lower part of the seat 220. The attachment portions 221 are provided slightly more on the rear side than the center of the seat 220. A pair of right and left supported portions 222 used to receive the load of the seat 220 is provided behind the attachment portions 221 under the seat 220. A pair of right and left supported portions 223 and 224 used to receive the load of the seat 220 is provided ahead of the attachment portions 221 under the seat 220. The attachment portions 221 according to the present preferred embodiment correspond to the "fixing portion" according to the present teaching .

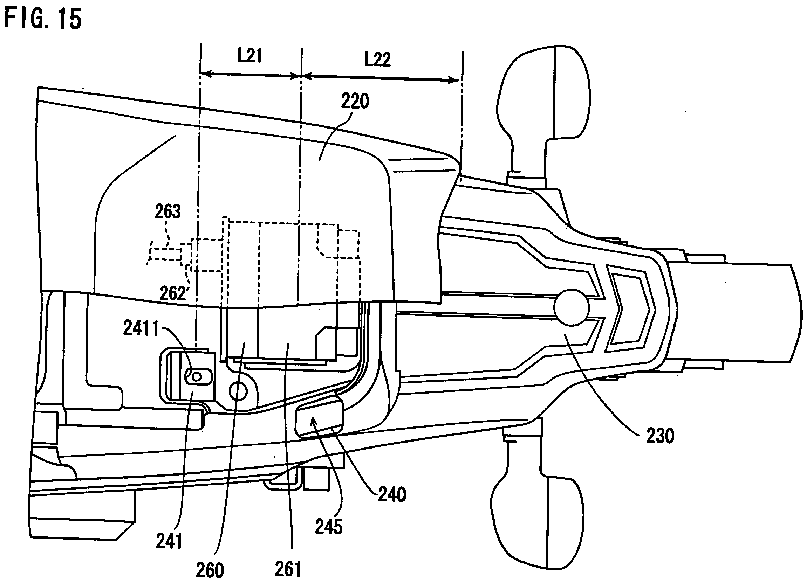

Fig. 15 is a plan view of the rear part of the motorcycle 200. In Fig. 15, a part of the seat 220 is cut away conveniently to show the structure under the seat 220 can be seen. The anti-theft unit 260 is provided under the seat 220.

The anti-theft unit 260 has an approximately rectangular parallelepiped shape. The anti-theft unit 260 is provided so that its area when seen in a top view is greater than in a side view. Stated differently, the anti-theft unit 260 is provided to be thin in the vertical direction. In this way, the anti-theft unit 260 can be stored in a narrow space held between the seat 220 and the rear cover 230.

The anti-theft unit 260 is provided to the bottom surface of the rear cover as its periphery is covered with a protection cover 261. A cable 263 is connected to the front part of the anti-theft unit 260 through a connector 262. The cable 263 includes a power supply line or a signal line.

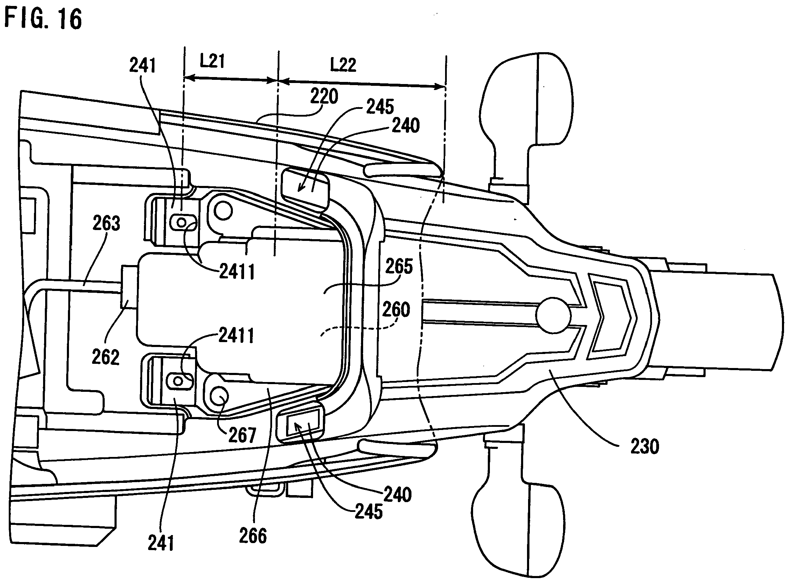

Fig. 16 is a plan view of the rear part of the motorcycle 200. In Fig. 16, a part of the seat 220 is cut away conveniently to show the structure under the seat 220. As opposed to Fig. 15, a protection case 265 is mounted above the anti-theft unit 260. In Fig. 15, the protection case 265 is removed for the ease of illustrating the shape of the anti-theft unit 260, but the anti-theft unit 260 is used as it is covered with the protection case 265 in reality. The anti-theft unit 260 has its upper and side surfaces covered with the protection case 265. If for example the seat 220 is removed, the anti-theft unit 260 is further covered with the protection case 265, which can make it difficult to access the anti-theft unit 260.

Fixing plates 266 that extend in the crosswise direction are provided at the lower part of the protection case 265. The fixing plates 266 are fixed to the bottom surface of the rear cover 230 by bolts 267.

An opening is formed at the bottom of the rear cover 230 ahead of the positions of the right and left fixing plates 266, and the seat attachment hole 2411 provided at the coupling frame 241 is exposed through the opening. The attachment portions 221 (Fig. 14) provided under the seat 220 and the seat attachment holes 2411 are registered and bolted, so that the seat 220 is fixed to the coupling frame 241.

The reference character L21 in Fig. 16 indicates the distance from the seat attachment hole 2411 to the anti-theft unit 260. The reference character L22 indicates the distance from the anti-theft unit 260 to the rear end of the seat 220. According to the present preferred embodiment, the distance L21 is shorter than the distance L22. Stated differently, the anti-theft unit 260 is provided ahead of the intermediate position between the seat attachment hole 2411 as the "seat attachment portion" according to the present teaching and the rear end of the seat 220. The position about in the center of the anti-theft unit 260 in the front-back direction is set as the position of the anti-theft unit 260 as shown in Fig. 15.

The anti-theft unit 260 is provided in the position, so that the seat 220 and the anti-theft unit 260 do not interfere with each other even if the seat 220 is bent. The space between the seat 220 and the anti-theft unit 260 is small, which can make it difficult to access the anti-theft unit 260 from the outside.

The anti-theft unit 260 is provided in a position overlapping the right and left seat attachment holes 2411 with respect to the crosswise direction of the vehicle. The anti-theft unit 260 is also provided in a position overlapping the right and left seat attachment holes 2411 with respect to the vertical direction of the vehicle. The anti-theft unit 260 and the seat 220 are attached close to each other with respect to the crosswise and vertical directions, which can make it difficult to access the anti-theft unit 260.

The anti-theft unit 260 is positioned behind the seat attachment holes 2411 and the connector 262 connected to the anti-theft unit is positioned between the seat attachment holes 2411 when seen in a top view. The anti-theft unit 260 and the seat 220 are attached close to each other in the front-back direction of the vehicle, which can make it difficult to access the anti-theft unit 260.

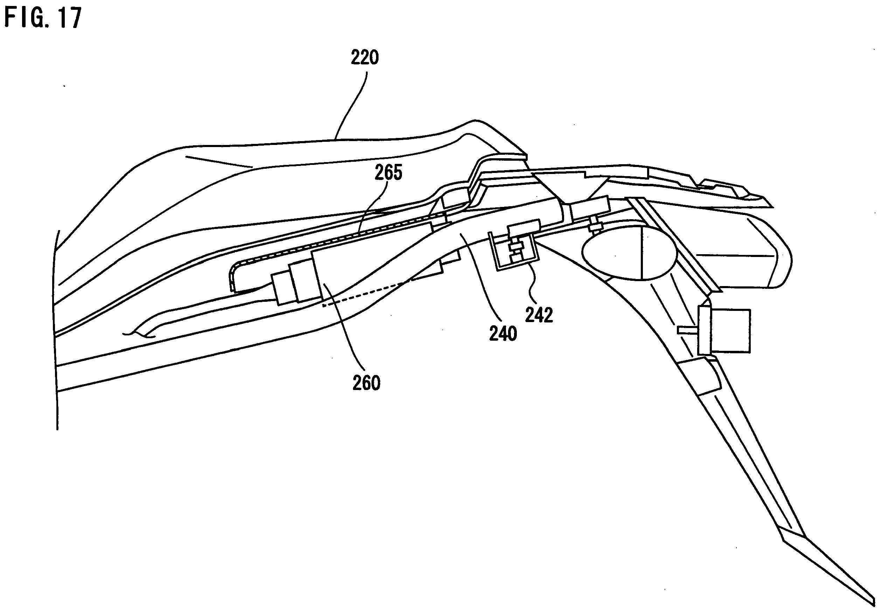

Fig. 17 is a side view of the rear part of the motorcycle 200. In Fig. 17, the rear cover 230 is removed, and the internal structure can be seen. A part of the protection cover 265 is cut away conveniently to show the inside structure. As shown, the anti-theft unit 260 is provided in a position overlapping the side frames 240 when viewed in a side view. This can make it difficult to access the anti-theft unit 260 from the right and left sides. When the anti-theft unit 260 is positioned under the metal frames, the receiving sensitivity to GPS signals is degraded. According to the present preferred embodiment, the anti-theft unit 260 is positioned on the side of the side frames 240, and therefore the receiving sensitivity to GPS signals is not degraded.

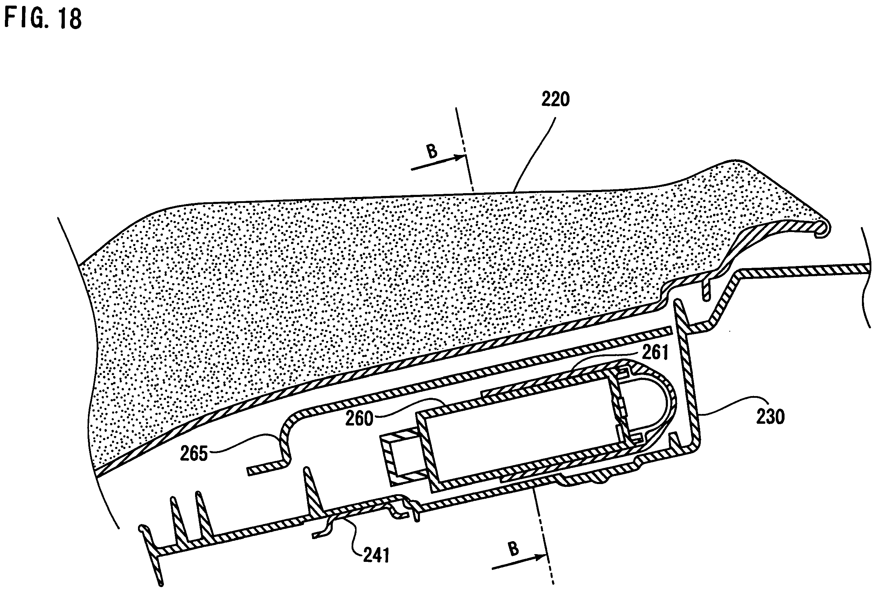

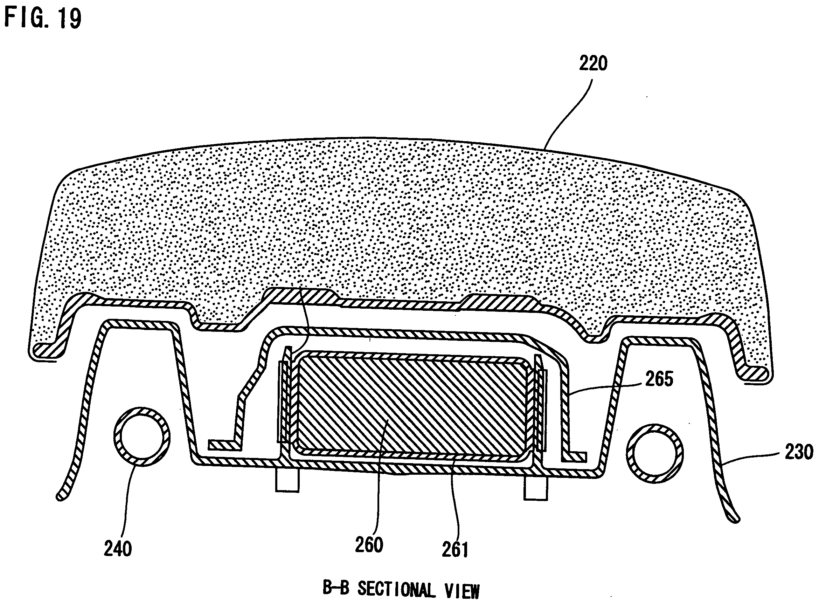

Fig. 18 is a side sectional view of the rear part of the motorcycle 200. Fig. 19 is a front sectional view of the rear part of the motorcycle 200. As shown in Fig. 18, the anti-theft unit 260 is provided slightly inclined forward. The anti-theft unit 260 has its upper part covered with the seat 220 and the protection case 265 and its lower part covered with the rear cover 230. As described above, the seat 220 and the protection case 265 are fixed by bolts. In order to access the anti-theft unit 260, the operation of removing the bolts must be carried out twice, and therefore easy access to the unit is prohibited.

As shown in Figs. 14 and 16, the attachment parts 221 of the seat 220 are provided in front of the anti-theft unit 260, and the supported portions 222 of the seat 220 are provided behind the anti-theft unit 260. When the seat 220 is bent by the weight of a rider or the like, the bottom portion of the seat 220 and the anti-theft unit 260 can be prevented from interfering with each other.

The right and left supported portions 222 are provided on the right and left sides of the anti-theft unit 260. More specifically, the supported portions 222 are provided in positions overlapping the anti-theft unit 260 with respect to the front-back direction of the vehicle. The supported portions 222 are provided in positions overlapping the anti-theft unit 260 also in the vertical direction of the vehicle. When the seat 220 is bent by the weight of a rider or the like, the degree of the bending of the bottom part of the seat 220 above the anti-theft unit 260 is small, and therefore the anti-theft unit 260 can be prevented from interfering without increasing the size of the vehicle.

### Third Preferred Embodiment

A motorcycle 300 according to a third preferred embodiment will be described in conjunction with the accompanying drawings.

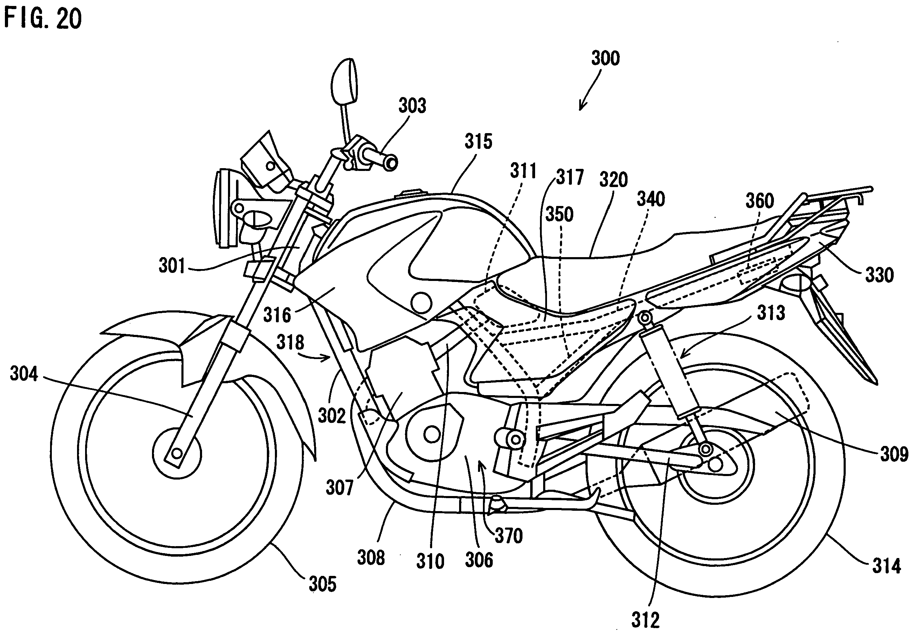

Fig. 20 is a side view of the entire motorcycle 300 according to the third preferred embodiment . The motorcycle 300 includes a main frame 302 in the center of the vehicle. An engine 370 is provided in the main frame 302. The main frame 302 surrounds the top, front, and rear of the engine 370 when seen in a side view.

A head pipe 301 is provided at the front of the main frame 302. A steering shaft is rotatably attached to the head pipe 301. A handle 303 is attached to the upper end of the steering shaft. A front fork 304 is provided on the right and left sides of the steering shaft. The front fork 304 rotates together with the steering shaft in the horizontal direction. A front wheel 305 is rotatably provided at the lower end of the front fork 304.

A fuel tank 315 is provided above the main frame 302. A seat 320 is provided behind the fuel tank 315. A rear cover 330 is provided under the seat 320. The rear cover 330 is positioned above the rear wheel 314.

A pair of right and left side frames 340 is provided near the upper part of the main frame 302. The side frames 340 extend upward to the back of the vehicle. The side frames 340 extend to the vicinity of the rear end of the seat 320. The side frames 340 support the seat 320 and the rear cover 330.

A pair of right and left support frames 350 is attached in a position lower than the attachment position of the side frames 340. The support frames 350 extend upward to the back of the vehicle. The rear ends of the support frames 350 are connected to the side frames 340 and thus support the side frames 340.

The main frame 302, the side frames 340 and the support frames 350 are all metal frames. The main frame 302, the side frames 340, the support frames 350 and a coupling frame 341 that will be described form the frame 318 of the motorcycle 300.

A rear arm 312 is attached to the rear part of the main frame 302 so that it can rotate in the vertical direction. A rear wheel 314 is rotatably attached to the rear end of the rear arm 312. The rear arm 312 and the frame 318 are connected to each other by a rear cushion member 313. The rear arm 312 is attached rotatably around a shaft provided at the main frame 302 near the rear part of the crankcase 306 of the engine 370. However, the rear arm 312 may be attached so that it can rotate around the output shaft of the rear part of the crankcase 306 of the engine 370.

The engine 370 includes the crankcase 306 and a cylinder 307 positioned above the crankcase 306. An intake path 310 is connected to the rear part of the cylinder 307. The intake path 310 extends backward from the rear part of the cylinder 307. An air cleaner 311 is connected to the rear end of the intake path 310. An exhaust path 308 is connected to the front part of the cylinder 307. The exhaust path 308 extends downward from the front part of the cylinder 307 and then backward along the bottom of the engine 370. The rear end of the exhaust path 308 is connected with a muffler 309.

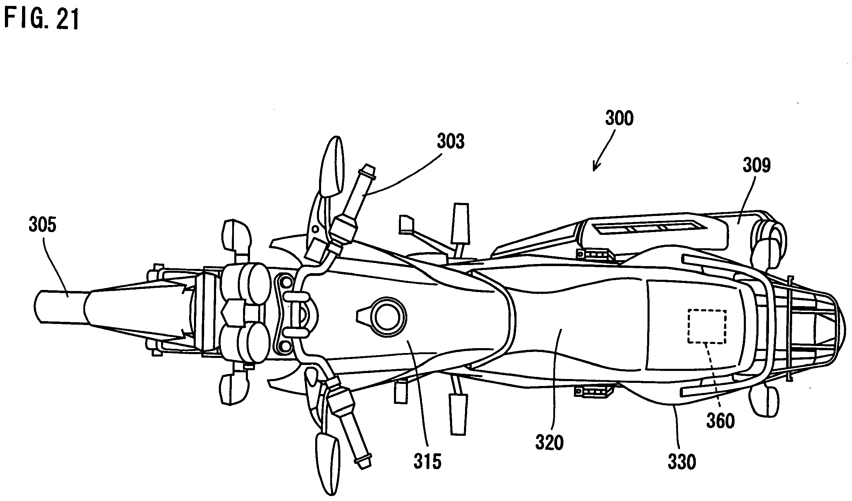

Fig. 21 is a plan view of the motorcycle 300. As shown in Fig. 21, the seat 320 extends from the vicinity of the center of the body to the back and the rear cover 330 is provided under the rear part of the seat 320. The rear cover 330 is provided above the rear wheel 314 to cover the space under the seat 320. As will be described in detail, an anti-theft unit 360 according to the present preferred embodiment is provided under the seat 320.

Referring back to Fig. 20, a pair of right and left front covers 316 is provided on the left and right of the fuel tank 315. The front covers 316 extend downward from the lower part of the fuel tank 315. A pair of right and left side covers 317 is attached on the left and right of the seat 320. The side covers 317 are provided under the seat 320.

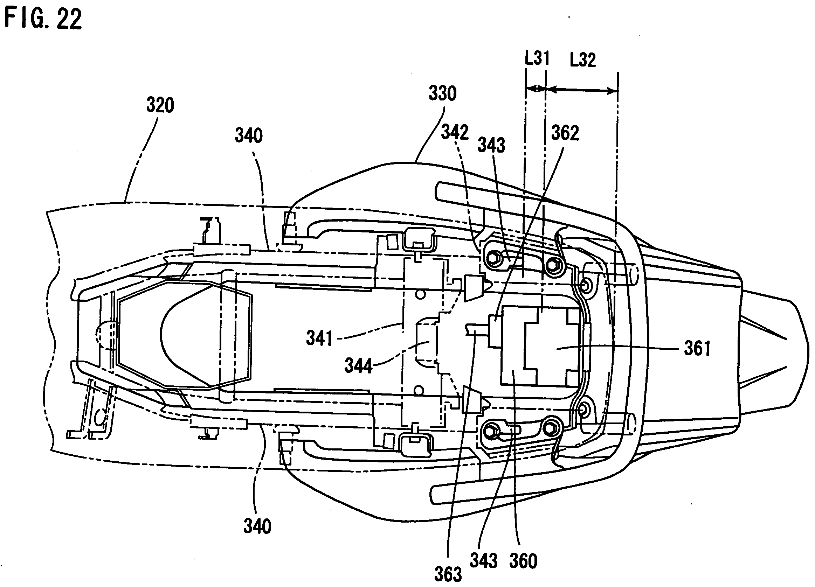

Fig. 22 is a plan view of the rear part of the motorcycle 300. In Fig. 22, only the outer shape of the seat 320 is shown and the structure under the seat 320 can be seen. The anti-theft unit 360 is attached under the seat 320. The anti-theft unit 360 is attached to the bottom surface of the rear cover 330 as its periphery is covered with a protection cover 361.

The anti-theft unit 360 is provided between the right and left side frames 340 when seen in a top view. The anti-theft unit 360 has an approximately rectangular parallelepiped shape. The anti-theft unit 360 is provided so that its area when seen in a top view is greater than in a side view. More specifically, the anti-theft unit 360 is provided to be thin in the vertical direction. In this way, when the anti-theft unit 360 is provided in the narrow space surrounded by the seat 320 and the rear cover 330, the height of the vehicle is not raised.

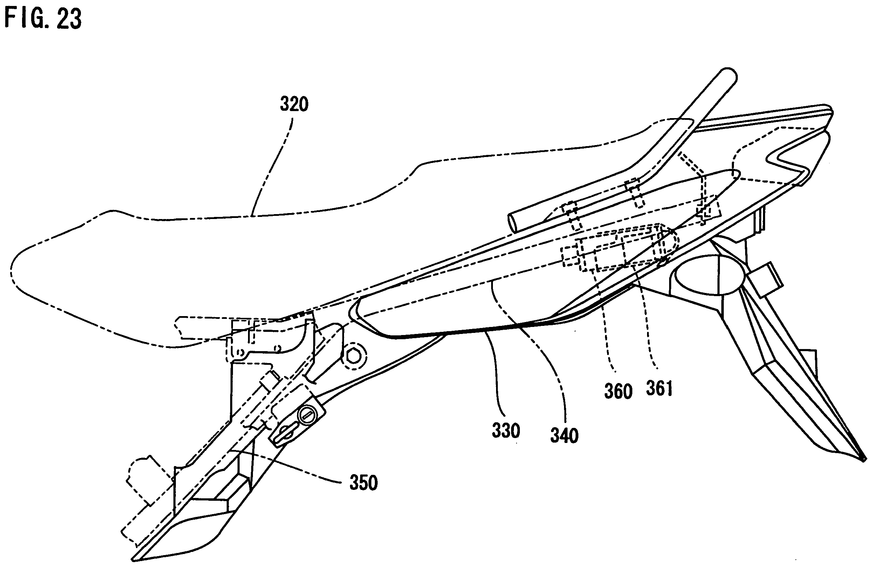

Fig. 23 is a side view of the rear part of the motorcycle 300. As shown, the anti-theft unit 360 is provided in a position overlapping the side frames 340 when seen in a side view. This can make it difficult to access the anti-theft unit 360 from the right and left sides. When the metal frames are above the anti-theft unit 360, the receiving sensitivity to GPS signals is degraded. However, the anti-theft unit 360 is positioned on the sides of the side frames 340 in this embodiment, and therefore degradation in the receiving sensitivity to GPS signals is reduced.

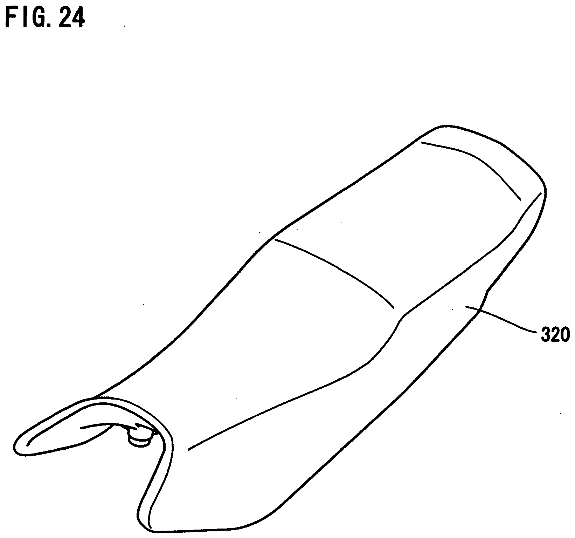

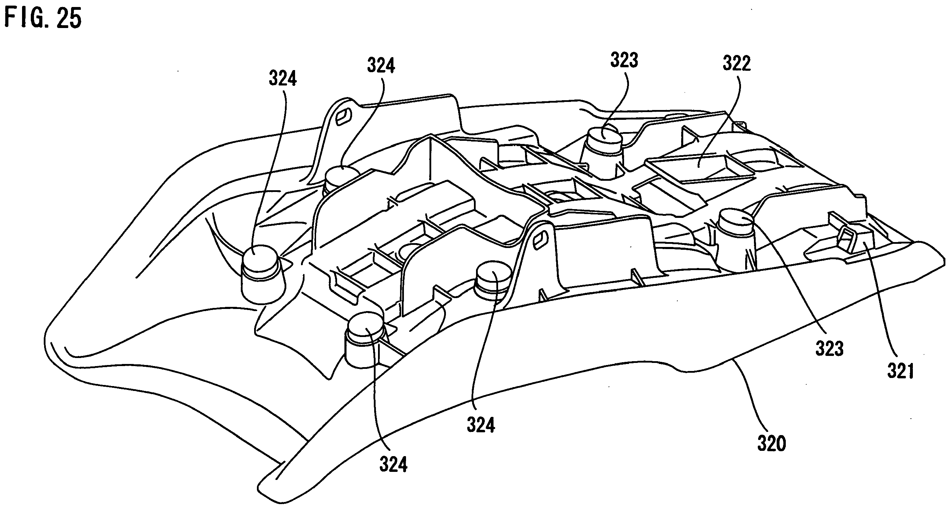

Fig. 24 is a perspective view of the seat 320. Fig. 25 is a bottom view of the seat 320. A pair of attachment holes 321 is provided in a position near the rear end at the bottom surface of the seat 320. The attachment holes 321 according to the present preferred embodiment correspond to the "fixing portion" according to the present teaching. An attachment hook 322 is provided at the bottom surface of the seat 320 slightly more on the rear side than the center in the front-back direction. A pair of supported portions 323, and two pairs of supported portions 324 are provided at the bottom surface of the seat 320.

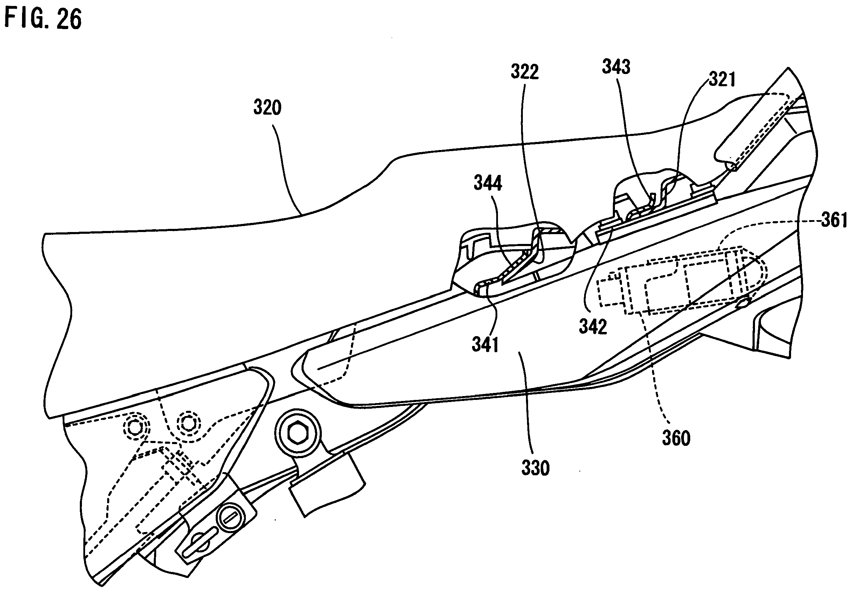

Fig. 26 is a side view of how the seat 320 is fixed. In Fig. 26, a part of the seat 320 is cut away conveniently to show the inside structure. As shown, an attachment hook 343 is inserted into an attachment hole 321 in the seat 320. As shown in Fig. 22, the attachment hooks 343 are provided on the right and left sides of the front part of the anti-theft unit 360. In these positions, the seat 320 is fixed. The "attachment hooks 343" according to the present preferred embodiment correspond to the "seat attachment portion" according to the present teaching.

Referring back to Fig. 26, the seat 320 is fixed as the attaching hook 322 of the seat 320 is inserted into the insertion portion 344 formed at the coupling frame 341.

With reference to Fig. 22, the reference character L31 indicates the distance between the position of the attachment hooks 343 and the anti-theft unit 360. The reference character L32 indicates the distance between the anti-theft unit 360 and the rear end of the seat 320. According to the present preferred embodiment, the distance L31 is shorter than the distance L32. More specifically, the anti-theft unit 360 is provided ahead of the intermediate position between the attachment hooks 343 as the "seat attaching portion" and the rear end of the seat 320. In this way, when the seat 320 is bent by the weight of a rider or the like, the degree of the bending of the seat 320 above the anti-theft unit 360 is small. Therefore, the anti-theft unit can be provided a hardly accessible position under the seat 320 without increasing the size of the body. When the seat 320 is bent by the weight of a rider or the like, the anti-theft unit 360 and the bottom part of the seat 320 can be prevented from interfering with each other. Since the gap between the lower part of the seat 320 and the upper surface of the anti-theft unit 360 is small, easy access is prohibited.

The supported portions 323 of the seat 320 shown in Fig. 25 are in contact with the upper surface of the coupling frame 341 shown in Fig. 22. The supported portions 324 of the seat 320 shown in Fig. 25 are in contact with the upper surface of the side frame 340 shown in Fig. 22. In this way, the load of the seat 320 is received by the side frames 340. Since the supported portions 323 positioned on the right and left sides of the anti-theft unit 360 receive the weight of the seat 320, the anti-theft unit 360 and the bottom surface of the seat 320 can be prevented from interfering with each other when the seat 320 is bent. The attachment hooks 343 are positioned on the right and left sides of the anti-theft unit 360, and therefore the anti-theft unit 360 can be prevented from interfering with the lower part of the seat 320 even when the load of a rider is received.

The anti-theft unit 360 is provided between the attachment hooks 343 when seen in a top view. The front end of the anti-theft unit 360 is positioned ahead of the attachment hooks 343 and the rear end of the anti-theft unit 360 is positioned behind the attachment hooks 343. The attachment position of the anti-theft unit 360 and the attachment position of the seat 320 (the position of the "seat attachment portion") are the same in the front-back direction of the vehicle, which can make it difficult to access the anti-theft unit 360. The anti-theft unit 360 is provided between the attachment positions of the seat 320 in the crosswise direction of the vehicle, which can make it difficult to access the anti-theft unit 360.

### Fourth Preferred Embodiment

Now, a motorcycle 400 according to a fourth preferred embodiment will be described in conjunction with the accompanying drawings.

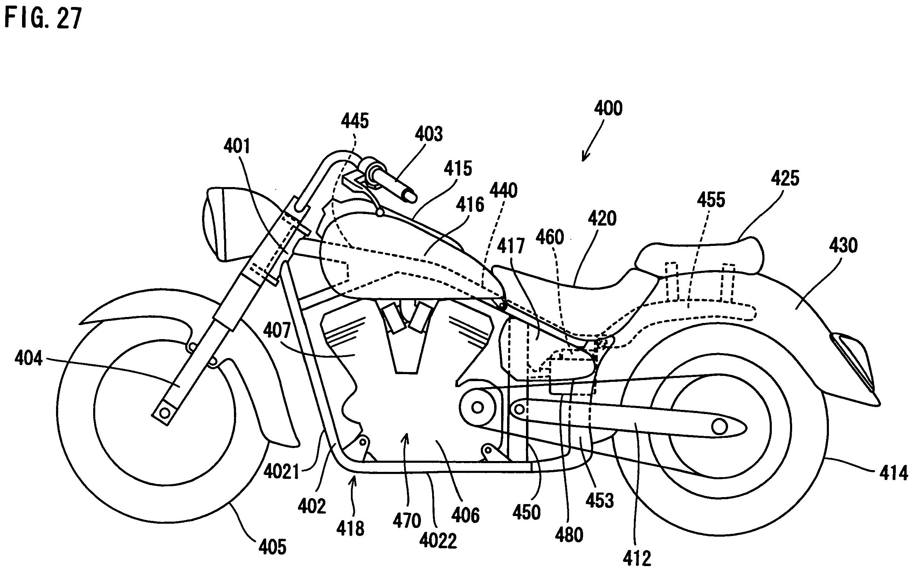

Fig. 27 is a side view of the entire motorcycle 400 according to the fourth preferred embodiment. The motorcycle 400 includes a main frame 402 at the front and lower part of the vehicle. An engine 470 is provided in the main frame 402. The main frame 402 surrounds the front and bottom of the engine 470 when seen in a side view.

The motorcycle 400 includes a top frame 445 at the upper part of the vehicle. Side frames 440 are connected to the rear end of the top frame 445. The top frame 445 and the side frames 440 are provided above the engine 470 when seen in a side view.

A head pipe 401 is provided in front of the main frame 402 and the top frame 445. A steering shaft is rotatably attached to the head pipe 401. A handle 403 is attached to the upper end of the steering shaft. A front fork 404 is provided on the right and left sides of the steering shaft. The front fork 404 rotates together with the steering shaft in the horizontal direction. A front wheel 405 is rotatably provided at the lower end of the front fork 404.

A fuel tank 415 is provided above the engine 470. A main seat 420 is provided behind the fuel tank 415. A rear seat 425 is provided behind the main seat 420. A rear cover 430 is provided under the main seat 420 and the rear seat 425. The rear cover 430 is positioned to cover the rear wheel 414 from above.

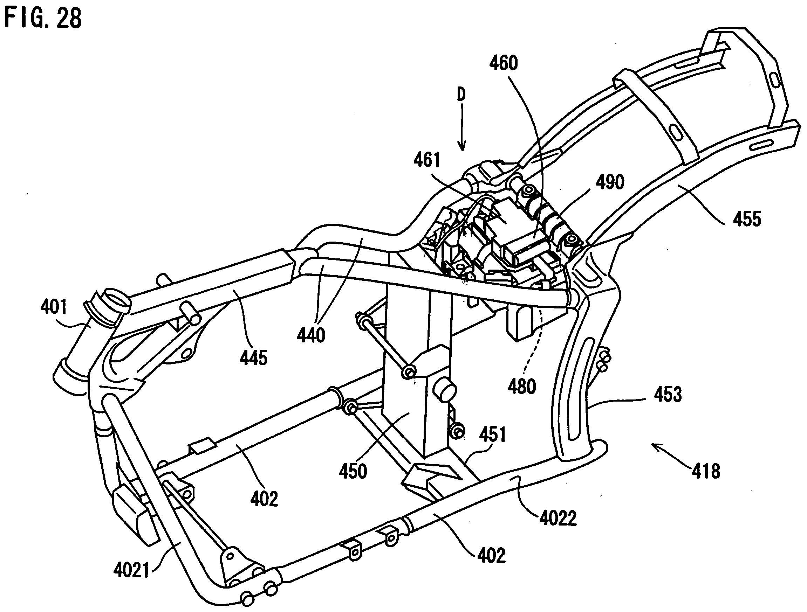

Fig. 28 is a perspective view showing the attachment structure for the frame 418 and the anti-theft unit 460 of the motorcycle 400. The top frame 445 that extends backward is connected to the head pipe 401. A pair of right and left side frames 440 is connected to the rear part of the top frame 445. The side frames 440 extend downward to the back of the vehicle. As shown in Fig. 27, the side frames 440 extend to the vicinity of the lower part of the main seat 420.

As shown in Fig. 28, the main frame 402 includes a pair of right and left down frames 4021 that extends downward from the head pipe 401. The main frame 402 includes a pair of right and left bottom frames 4022 connected to the lower ends of the down frames 4021. The right and left bottom frames 4022 extend along the bottom part of the vehicle to the back.

A coupling frame 451 arranged to couple the right and left bottom frames 4022 is provided near the lower part of the main seat 420. A support frame 450 is attached to the coupling frame 451. The support frame 450 is attached on the upper surface of the coupling frame 451 and extends upward approximately in the vertical direction. The support frame 450 supports the side frames 440 at the upper end thereof.

A pair of right and left support frames 453 that extends upward is provided at the rear ends of the bottom frames 4022. The rear ends of the side frames 440 are connected to the upper ends of the support frames 453.

A pair of right and left back frames 455 is connected to the rear ends of the right and left side frames 440. The back frames 455 extend backward and upward. The back frames 455 are positioned above the rear wheel 414 and support the rear seat 425.

The main frame 402, the top frame 445, the side frames 440, the support frames 450, the support frames 453, the back frames 455, and a coupling frame 441 that will be described are all metal frames and form the frame 418 of the motorcycle 400.

Referring back to Fig. 27, a rear arm 412 is attached to the support frame 450 so that it can rotate in the vertical direction. The rear wheel 414 is rotatably attached to the rear end of the rear arm 412. The rear arm 412 and the frame 418 are connected by a rear cushion member that is not shown.

The engine 470 includes a crankcase 406 and a cylinder 407 positioned above the crankcase 406.

A pair of right and left front covers 416 is attached on the right and left sides of the fuel tank 415. The front covers 416 extend downward from the sides of the fuel tank 415. A pair of right and left side covers 417 is provided under the main seat 420.

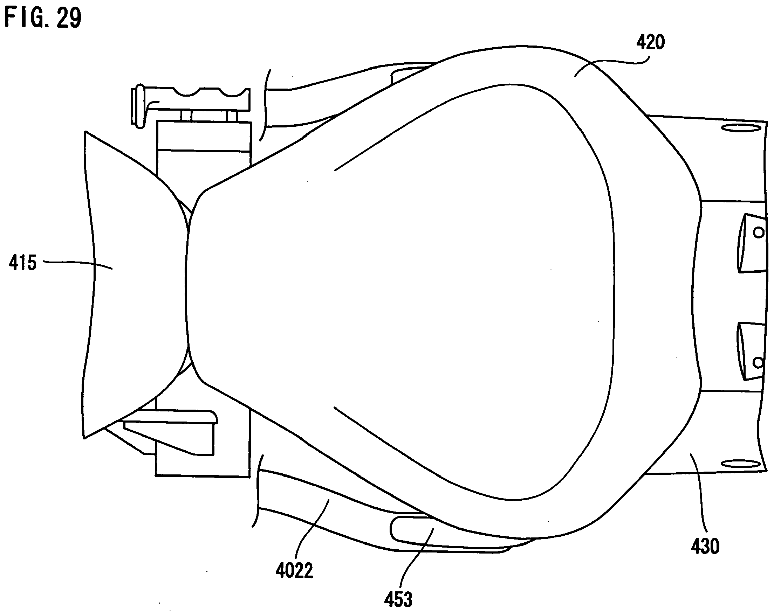

Fig. 29 is a plan view of the periphery of the main seat 420. As shown in Fig. 29, the main seat 420 is provided behind the fuel tank 415.

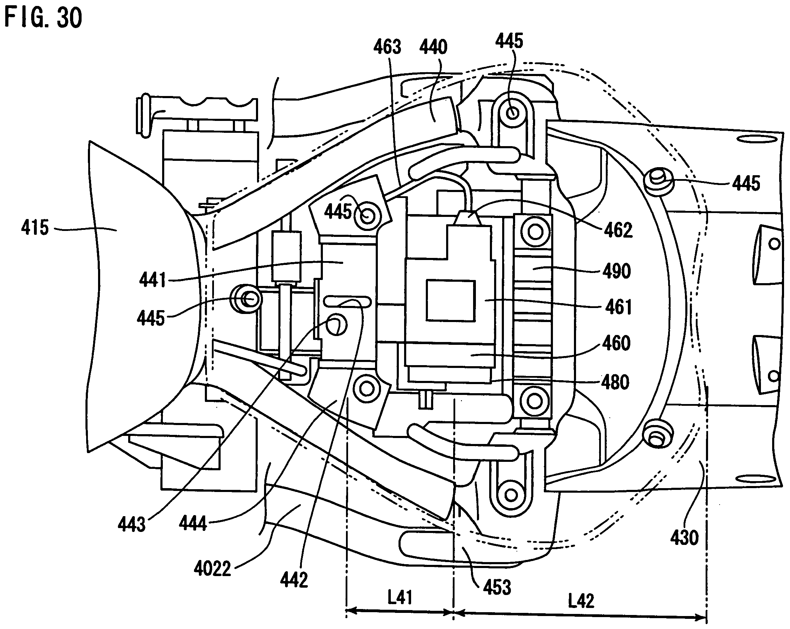

Fig. 30 is a plan view of the motorcycle 400 showing only the outer shape of the main seat 420. An anti-theft unit 460 is provided under the main seat 420. The anti-theft unit 460 is covered with a protection cover 461. A cable 463 is connected to the right side part of the anti-theft unit 460 through a connector 462. The cable 463 includes a power supply line, a signal line, and the like.

The anti-theft unit 460 has an approximately rectangular parallelepiped shape. The anti-theft unit 460 is attached so that its area when seen in a top view is greater than in a side view. More specifically, the anti-theft unit 460 is provided to be thin in the vertical direction. The anti-theft unit 460 is positioned between the right and left side frames 440 when seen in a top view. A battery 480 is provided under the anti-theft unit 460. The battery 480 is stored in a battery case 490 and the anti-theft unit 460 is attached above the battery 480.

The coupling frame 441 is provided in front of the anti-theft unit 460. As will be described, the bottom part of the main seat 420 is fixed to the coupling frame 441.

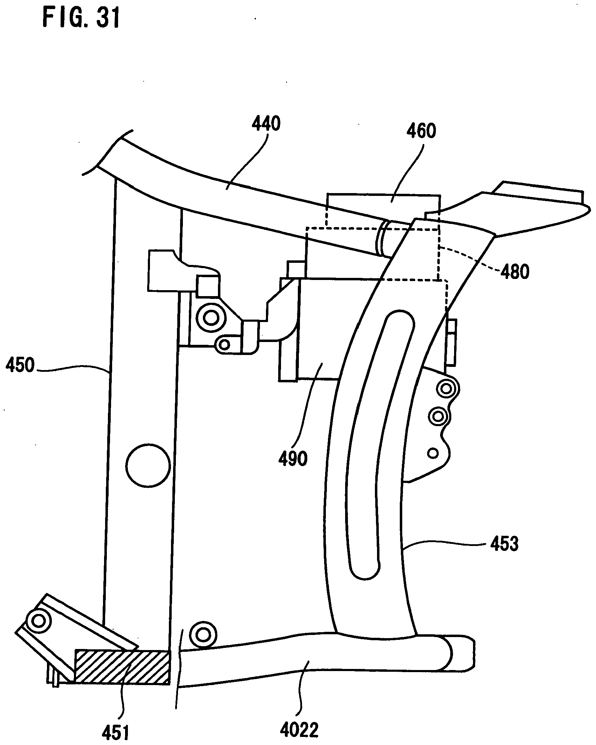

Fig. 31 is a side view showing the attachment structure for the anti-theft unit 460. The anti-theft unit 460 is provided in a position overlapping the side frames 440 when seen in a side view. This can make it difficult to access the anti-theft unit 460 from the right and left sides. When the anti-theft unit 460 is provided under the metal frames, the receiving sensitivity to GPS signals is degraded. According to the present preferred embodiment, the anti-theft unit 460 is provided on the lateral side of the side frames 440 and the upper part of the anti-theft unit 460 is provided above the side frames 440. Therefore, degradation in the receiving sensitivity of the anti-theft unit 460 can be reduced.

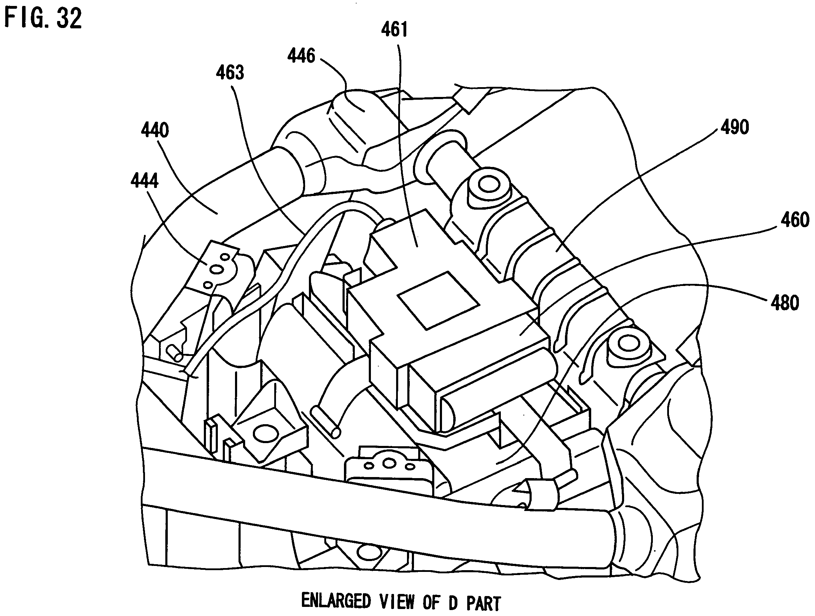

Fig. 32 is a perspective view showing the attachment structure for the anti-theft unit 460. Fig. 32 is an enlarged view of the part denoted by D in Fig. 28. The anti-theft unit 460 is attached on the battery 480. The battery 480 is stored in the battery case 490. The battery case 490 has its upper part opened, and the anti-theft unit 460 is placed at the opening part.

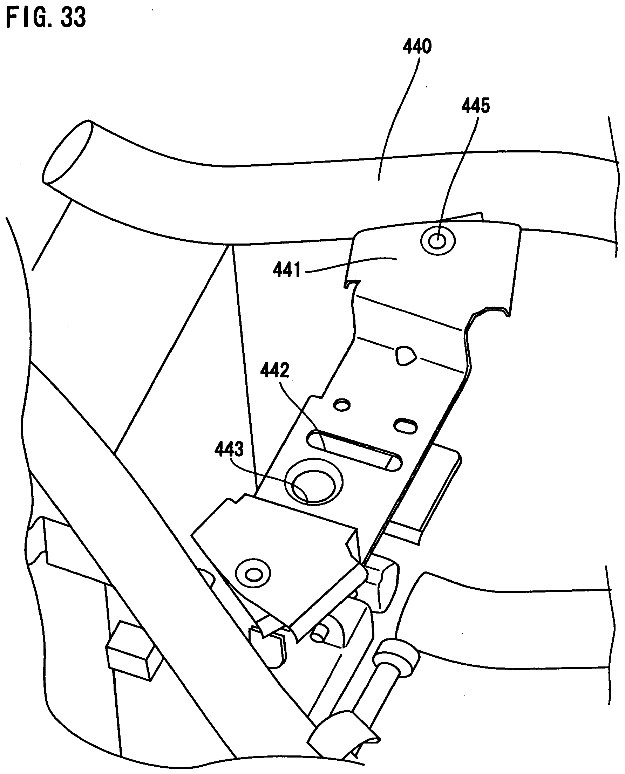

A pair of right and left brackets 444 is attached to the right and left side frames 440. The coupling frame 441 shown in Fig. 33 is attached to the brackets 444. In Fig. 33, the brackets 444 are not shown. As the right and left ends of the coupling frame 441 are fixed to the right and left brackets 444, the coupling frame 441 is fixed to the side frames 440.

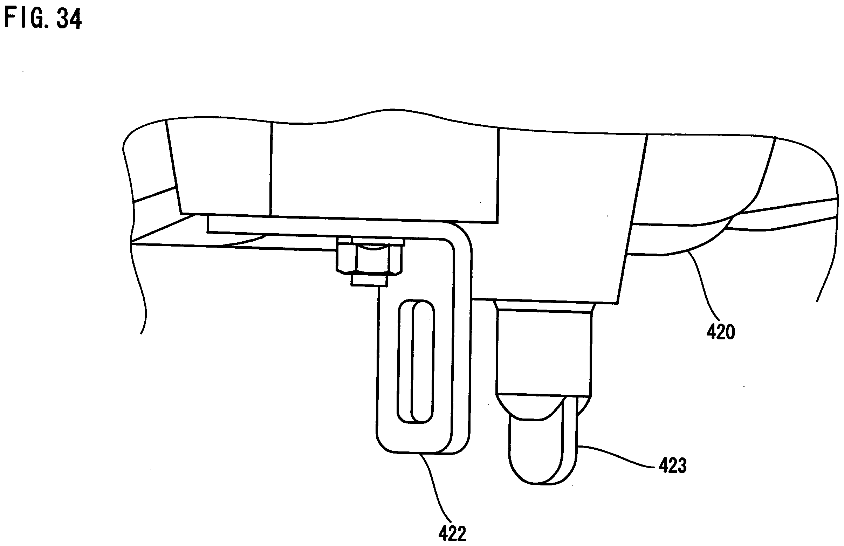

As shown in Fig. 33, a seat attachment hole 442 is provided in the center of the coupling frame 441 in the crosswise direction. A seat attachment hole 443 is provided at the left side part of the seat attachment hole 442. A fixing member 422 shown in Fig. 34 is inserted into the seat attachment hole 442. The attachment portion 423 shown in Fig. 34 is inserted into the seat attachment hole 443. The fixing member 422 and the attachment portion 423 are provided to the lower part of the main seat 420. The seat attachment hole 442 and the seat attachment hole 443 according to the present preferred embodiment correspond to the "seat attachment portion" according to the present teaching. The fixing member 422 and the attachment portion 423 according to the present preferred embodiment correspond to the "fixing portion" according to the present teaching.

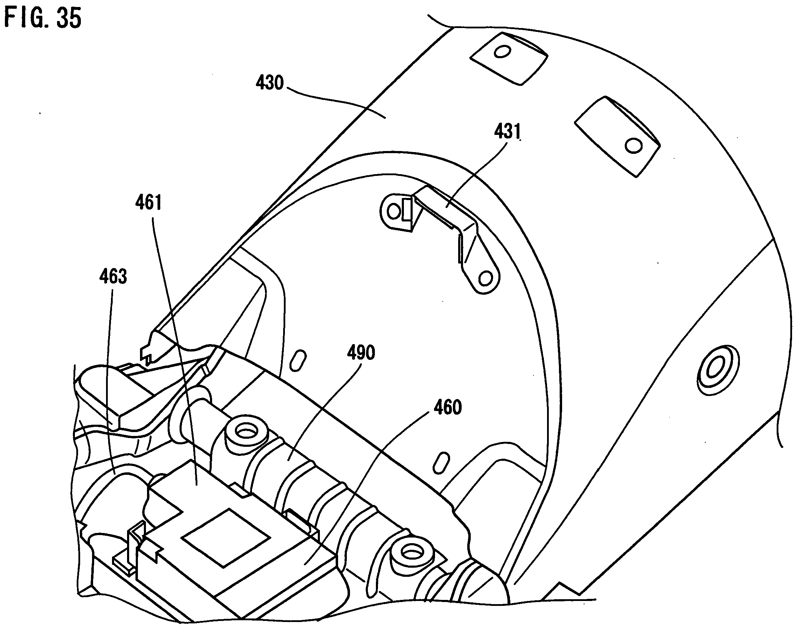

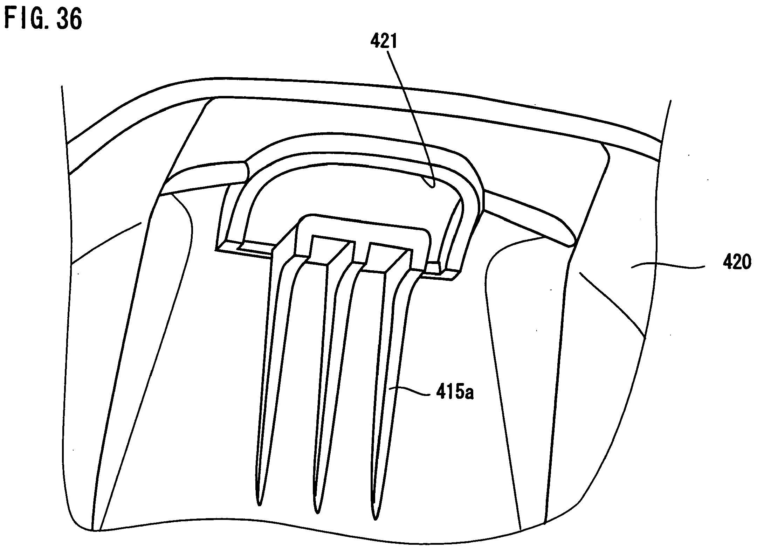

Fig. 35 is a view of the insert plate 431 provided at the rear cover 430 for fixing of the main seat 420. Fig. 36 shows the attachment hole 421 provided at the rear part of the main seat 420.

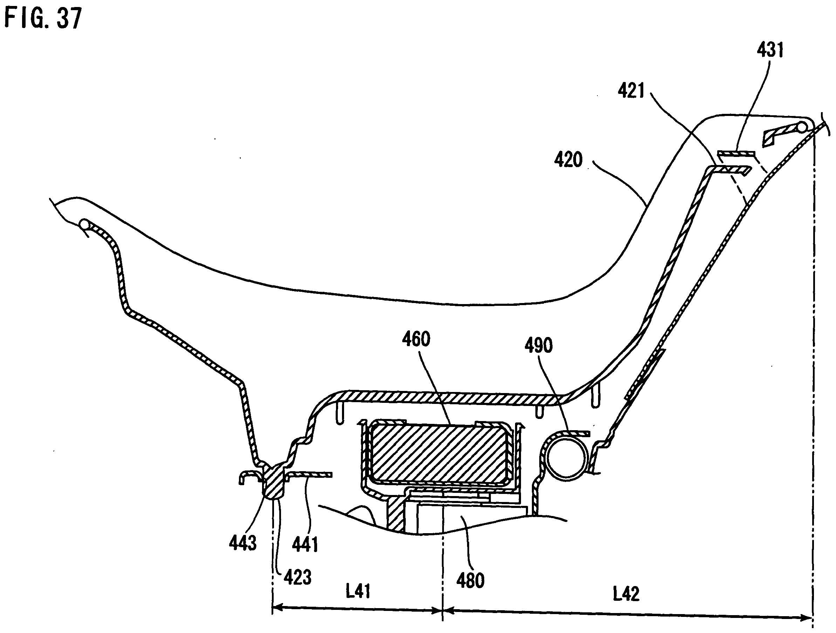

As shown in Fig. 37, the insertion of the attachment hole 421 of the main seat 420 into the insert plate 431 guides the main seat 420 to the attachment position. As the attachment portion 423 under the main seat 420 is inserted into the seat attachment hole 443 of the coupling frame 441, the main seat 420 is fixed. In addition, the fixing member 422 under the main seat 420 is inserted into the seat attachment hole 442 of the coupling frame 441 and the fixing member 422 is locked by a locking mechanism that is not shown, so that the main seat 420 is locked.

With reference to Fig. 30, the reference character L41 indicates the distance from the position of the seat attachment hole 442 to the anti-theft unit 460. The reference character L42 indicates the distance from the anti-theft unit 460 to the rear end of the main seat 420. According to the present preferred embodiment, the distance L41 is shorter than the distance L42. Stated differently, the anti-theft unit 460 is provided more on the front side than the intermediate position between the seat attachment hole 442 corresponding to the "seat attachment portion" and the rear end of the main seat 420. In this way, when the seat 420 is bent by the weight of a rider, the degree of the bending of the main seat 420 above the anti-theft unit 460 is small, and therefore the anti-theft unit 460 can be provided near the lower part of the main seat 420. The size of the body can be prevented from increasing. The anti-theft unit 460 does not interfere with the bottom part of the main seat 420. The gap between the anti-theft unit 460 and the main seat 420 is small, which can make it difficult to access from the outside.

The anti-theft unit 460 is provided in a position overlapping the seat attachment hole 442 as the seat attachment portion with respect to the crosswise and vertical directions of the vehicle. The anti-theft unit 460 is provided near the main seat 420, but the bending of the main seat is small, and the main seat 420 and the anti-theft unit 460 do not interfere with each other. The gap between the main seat 420 and the anti-theft unit 460 is small, which can make it difficult to access to the part.

In Fig. 30, the supported portions 445 provided at the bottom part of the main seat 420 are shown in solid lines (while the outer shape of the main seat 420 is shown in two-dot chain line). The supported portions 445 are in contact with frames and the like and serve to receive the load of the main seat 420 and a rider. The supported portions 445 are contacted in one position in the center of the front part of the main seat 420, in two positions at the right and left ends of the coupling frame 441, in two positions at the upper ends of the support frames 453, and in two positions at the front part of the rear cover 430. In the two positions at the upper end of the support frames 453 for example, the load of the main seat 420 is received by the right and left sides of the anti-theft unit 460. Therefore, the degree of the bending of the main seat 420 above the anti-theft unit 460 is small when the main seat 420 is bent. The anti-theft unit 460 can be provided near the lower part of the main seat 420, and the size of the body can be prevented from increasing. The main seat 420 and the anti-theft unit 460 do not interfere with each other.

The seat attachment hole 442 is provided ahead of the anti-theft unit 460. The supported portions 445 in the two positions at the upper end of the support frames 453 and the two positions at the front part of the rear cover 430 are behind the anti-theft unit 460. In this way, when the main seat 420 is bent, the anti-theft unit 460 and the bottom part of the main seat 420 do not interfere with each other.

The fixing portion is described by referring to examples in the above description of the preferred embodiments, but the structure of the fixing portion is not limited to those described. A hook type or an insert type arrangement may be employed or bolts may be used for fixing, while a locking structure may be used as in the first preferred embodiment.

According to the above-described preferred embodiments, the unit is provided in a position overlapping the frame when seen in a side view, while the unit may be provided above the frame when seen in a side view. It is only necessary that a part of the unit is positioned on the side. A part of the unit may be provided under the frame. More specifically, it is only necessary that the entire unit is not positioned under the frame. When the unit is provided on the side of or above the frame, degradation in the receiving sensitivity to GPS signals can be reduced.

Several combinations of the positions of the supported portions and the fixing portion are described in the preferred embodiments, while positional combinations are not limited to the arrangements in the preferred embodiments.

The position of the fixing portion is not limited to the arrangement according to the preferred embodiments. Several examples of the fixing portion are described in the preferred embodiments, while any of the fixing portions described as examples may be used depending on the position of the unit.

According to the preferred embodiments described above, the unit is provided between the seat attachment portion and the rear end of the seat. More specifically, the unit is provided more on the front side than the intermediate position between the seat attachment portion and the rear end of the seat. Alternatively, the unit may be positioned ahead of the seat attachment portion. In this case, it is only necessary that the unit is positioned behind the intermediate position between the seat attachment portion and the front end of the seat. Note however that when a fuel tank is provided in front of the seat, the unit is preferably provided under the rear part of the seat. As compared to the case in which the unit is provided under the front part of the seat, the effect of the fuel tank upon the receiving environment for GPS signals is smaller and degradation in the receiving sensitivity to GPS signals can be prevented.

In the following, the effects of the embodiments stated above are described.

A motorcycle according to the present teaching includes a seat above a frame. An anti-theft unit as the unit according to the claim wording is provided between side frames under the seat when seen in a to view and in a position overlapping a side frame or above the side frame when seen in a side view, so that its area when seen in a top view is greater than the area when seen in a side view. The seat includes a fixing portion arranged to fix the seat to the seat attachment portion provided in the frame. The unit is provided ahead of the intermediate position between the position of the seat attachment portion and the position of the rear end of the seat with respect to the front-back direction of the vehicle. Alternatively, the unit is provided behind the intermediate position between the position of the seat attachment portion and the position of the front end of the seat with respect to the front-back direction of the vehicle.

The side frames are positioned on the side of the unit or under the unit, and therefore high receiving sensitivity can be secured. The unit is provided in a position equal to or higher than the side frames under the seat, and therefore the unit is provided near the seat in the vertical direction. The unit is provided near the seat attachment portion to which the seat is fixed, and the unit can be provided in a position where the downward bending of the seat is small when a rider gets on the vehicle. The unit is provided so that its area when seen in a top view is greater than in a side view, and therefore the size of the vehicle can be prevented from increasing. The unit is provided near the seat in the vertical direction and the seat is provided near the seat attachment portion to which the seat is fixed, which can make access from the outside difficult. As in the foregoing, in a motorcycle including a unit, the unit can be provided in a hardly accessible position while reducing degradation in the receiving sensitivity to GPS signals and without increasing the size of the body.

Furthermore, when the side frames are positioned on the sides of the unit, the unit can be protected from the right and left sides and the side frames make it difficult to access laterally. The unit is provided on the sides of the side frames under the seat, so that the unit can be provided in an even less accessible position.

In the motorcycles according to the first, second, and fourth preferred embodiment, one of the fixing portion and the supported portion is positioned ahead of the unit, and the other is positioned behind the unit. The fixing portion and the supported portion are supported by the frame. The seat is less bent around the fixing portion and the supported portion. The fixing portion and the supported portion are provided ahead of and behind the unit, the bending of the seat positioned above the unit can be reduced. When the unit is provided above, a distance can be secured between the seat and the unit while keeping the size of the body from increasing.

In the motorcycles according to the first and second preferred embodiments, the supported portion is provided in a position overlapping the unit with respect to the front-back direction of the vehicle. Stated differently, the supported portion is provided between a line passing through the front end of the unit and perpendicular to the ground surface and a line passing the rear end of the unit and perpendicular to the ground surface. The supported portion is supported by the frame. The seat is less bent around the supported portion. The supported portion is positioned both on the right and left of the unit, and the degree of the bending of the seat positioned above the unit can be reduced. When the unit is provided above, a distance between the seat and the unit can be secured while keeping the size of the body from increasing.

Furthermore, in the motorcycle according to the second preferred embodiment, the supported portion is provided in a position overlapping the unit with respect to the front-back and vertical directions of the vehicle. Stated differently, the supported portion is provided between a line passing through the front end of the unit and perpendicular to the ground surface and a line passing through the rear end of the unit and perpendicular to the ground surface. The supported portions are provided between a line passing through the upper end of the unit and parallel to the ground surface and a line passing through the lower end of the unit and parallel to the ground surface. Stated differently, the unit and supported portion are provided in an overlapping position when seen in a side view. The supported portions are positioned on the sides of the unit, which can make it difficult to laterally access the unit.

In the motorcycles according to the first, second, and fourth preferred embodiments, the frame includes a coupling frame that extends in the crosswise direction of the vehicle and couples side frames, and the seat attachment portion is provided at the coupling frame. The seat is fixed in a position nearer to the center than the side frames with respect to the crosswise direction of the vehicle. The unit is provided between the right and left side frames when seen in a top view. The unit and the seat attachment portion are provided close to each other in the crosswise direction of the vehicle. This can make it difficult to access to the unit.

In the motorcycle according to the third preferred embodiment, the unit is provided in a position overlapping the seat attachment portion with respect to the front-back direction of the vehicle. Stated differently, the seat attachment portion is provided between a line passing through the front end of the unit and perpendicular to the ground surface and a line passing through the rear end of the unit and perpendicular to the ground surface. The seat attachment portion and the unit are provided close to each other, and therefore access to the unit can be made difficult while keeping the size of the vehicle from increasing.

In the motorcycles according to the first, second, and fourth preferred embodiments, the unit is provided in a position overlapping the seat attachment portion with respect to the crosswise direction of the vehicle. Stated differently, the seat attachment portion is provided between a line passing through the right end of the unit and perpendicular to the ground surface and a line passing through the left end of the unit and perpendicular to the ground surface. The seat attachment portion and the unit are provided close to each other, which can make it difficult to access the unit.

Furthermore, in the motorcycles according to the second and fourth preferred embodiments, the unit is provided in a position overlapping the seat attachment portion with respect to the crosswise and vertical directions of the vehicle. Stated differently, the seat attachment portion is provided between a line passing through the right end of the unit and perpendicular to the ground surface and a line passing through the left end of the unit and perpendicular to the ground surface when seen in a top view. The seat attachment portion is provided between a horizontal line passing through the upper end of the unit and a horizontal line passing through the lower end of the unit when seen in a front view. Stated differently, the seat attachment portion is provided in a position overlapping the unit when seen in a front view. This can make it more difficult to access the unit.

The motorcycles according to the first, second, and third preferred embodiments include a rear wheel provided under the unit and a body cover provided between the rear wheel and the unit and having a lower end that extends backward and upward. The unit can be provided in a position overlapping the frame when seen in a side view above the body cover having a lower edge that extends backward and upward, so that the unit can be provided without increasing the size of the vehicle.

In the motorcycle according to the second preferred embodiment, the unit overlaps the seat when seen in a side view. The unit can be close to the seat. This can make it more difficult to access the unit without increasing the side of the vehicle.

Among others, the description above discloses an embodiment of a motorcycle in which an anti-theft unit 160 is provided under a seat 120 and between side frames 140 when seen in a top view. The anti-theft unit 160 is provided in a position overlapping side frames 140 when seen in a side view so that its area in a top view is greater than in a side view. The seat 120 includes a fixing member 121 arranged to fix the seat 120 to a seat attachment portion 140 provided at the frame. The anti-theft unit 160 is provided ahead of the intermediate position between the position of the seat attachment portion 141 and the position of the rear end of the seat 120 with respect to the front-back direction of the vehicle.

## Claims

1. Motorcycle, comprising:
a frame (118, 218, 318, 418) having right and left side frames (140, 240, 340, 440) that extend in a front-back direction of the motorcycle (100, 200, 300, 400); and
a seat (120, 220, 320, 420) provided above the frame (118, 218, 318, 418) and comprising a fixing portion (121, 221, 321, 422, 423) arranged to fix the seat (120, 220, 320, 420) to a seat attachment portion (142, 2411, 343, 442, 443) provided at the frame (118, 218, 318, 418),
**characterized in that**
a unit (160, 260, 360, 460) including an antenna configured to receive a Global Positioning System (GPS) signal is provided between the side frames (140, 240, 340, 440) under the seat (120, 220, 320, 420) when seen in a top view, and in a position overlapping the side frames (140, 240, 340, 440) or above the side frames (140, 240, 340, 440) when seen in a side view, wherein the area of the unit (160, 260, 360, 460) when seen in a top view is greater than in a side view, and
the unit (160, 260, 360, 460) is provided behind the seat attachment portion (142, 2411, 343, 442, 443) and in front of an intermediate position between the seat attachment portion (142, 2411, 343, 442, 443) and a rear end of the seat (120, 220, 320, 420) in the front-back direction of the motorcycle (100, 200, 300, 400) or in front of the seat attachment portion (142, 2411, 343, 442, 443) and behind an intermediate position between the seat attachment portion and a front end of the seat.

2. Motorcycle according to claim 1, **characterized in that** the seat (120, 220, 420) comprises a supported portion (122, 222, 445) supported by contacting the frame (118, 218, 418), and one of the fixing portion (121, 221, 422, 423) and the supported portion (122, 222, 445) is positioned in front of the unit (160, 260, 460) and the other is positioned behind the unit (160, 260, 460).

3. Motorcycle according to claim 1 or 2, **characterized in that** the seat (120, 220) comprises a supported portion (122, 222) supported by contacting the frame (118, 218), and the supported portion (122, 222) overlaps the unit (160, 260) in the front-back direction of the motorcycle (100, 200).

4. Motorcycle according to at least one of claims 1 to 3, **characterized in that** the seat (220) comprises a supported portion (222) supported by contacting the frame (218), and the supported portion (222) overlaps the unit (260) in a vertical direction of the motorcycle (200).

5. Motorcycle according to at least one of claims 1 to 4, **characterized in that** the frame (118, 218, 418) comprises a coupling frame (141, 241, 441) extending in crosswise direction of the motorcycle (100, 200, 400) and coupling the side frames (140, 240, 440).

6. Motorcycle according to claim 5, **characterized in that** the seat attachment portion (142, 2411, 442, 443) is provided at the coupling frame (141, 241, 441).

7. Motorcycle according to at least one of claims 1 to 6, **characterized in that** the unit (360) overlaps the seat attachment portion (343) in the front-back direction of the motorcycle (300).

8. Motorcycle according to at least one of claims 1 to 7, **characterized in that** the unit (160, 460) overlaps the seat attachment portion (142, 442, 443) in a crosswise direction of the motorcycle (100, 400).

9. Motorcycle according to at least one of claims 1 to 8, **characterized in that** the unit (460) overlaps the seat attachment portion (442, 443) in a vertical direction of the motorcycle (400).

10. Motorcycle according to at least one of claims 1 to 9, **characterized in that a** rear wheel (114, 214, 314) is provided under the unit (160, 260, 360), and a body cover (130, 230, 330) is provided between the rear wheel (114, 214, 314) and the unit (160, 260, 360) and has a lower end extending backward and upward when seen in a side view.

11. Motorcycle according to at least one of claims 1 to 10, **characterized in that** the unit (260, 460) and the seat (220, 420) overlap each other when seen in a side view.

## Patentansprüche

1. Motorrad, umfassend:
einen Rahmen (118, 218, 318, 418) mit einem rechten und linken Seitenrahmen (140, 240, 340, 440), die sich in einer Vorwärts- und Rückwärtsrichtung des Motorrads (100, 200, 300, 400) erstrecken; und
einen über dem Rahmen (118, 218, 318, 418) vorgesehenen Sitz (120, 220, 320, 420), der einen Befestigungsabschnitt (121, 221, 321, 422, 423) 320, 420) umfasst, der angeordnet ist, um den Sitz (120, 220, 320, 420) an einen am Rahmen (118, 218, 318, 418) vorgesehenen Sitzbefestigungsabschnitt (142, 2411, 343, 442, 443) zu befestigen,
**dadurch gekennzeichnet, dass**
eine Einheit (160, 260, 360, 460) mit einer Antenne zum Empfang eines Satellitennavigationssystem-(GPS)-Signals in einer Draufsicht zwischen den Seitenrahmen (140, 240, 340, 440) unter dem Sitz (120, 220, 320, 420) und in einer Seitenansicht in einer Position, die die Seitenrahmen (140, 240, 340, 440) überlappt, oder in einer Position oberhalb der Seitenrahmen (140, 240, 340, 440) vorgesehen ist, wobei der Bereich der Einheit (160, 260, 360, 460) in einer Draufsicht größer als jener in einer Seitenansicht ist, und
wobei die Einheit (160, 260, 360, 460) hinter dem Sitzbefestigungsabschnitt (142, 2411, 343, 442, 443) und vor einer Zwischenposition zwischen dem Sitzbefestigungsabschnitt (142, 2411, 343, 442, 443) und einem hinteren Ende des Sitzes (120, 220, 320, 420) in der Vorwärts- und Rückwärtsrichtung des Motorrads (100, 200, 300, 400), oder vor dem Sitzbefestigungsabschnitt (142, 2411, 343 , 442, 443) und hinter einer Zwischenposition zwischen dem Sitzbefestigungsabschnitt und einem vorderen Ende des Sitzes, angeordnet ist.

2. Motorrad nach Anspruch 1, **dadurch gekennzeichnet, dass** der Sitz (120, 220, 420) einen mit dem Rahmen (118, 218, 418) in Berührung stehenden Stützabschnitt (122, 222, 445) umfasst, und der Befestigungsabschnitt (121, 221, 422, 423) oder der Stützabschnitt (122, 222, 445) vor der Einheit (160, 260, 460) positioniert ist und der andere davon hinter der Einheit (160, 260, 460) positioniert ist.

3. Motorrad nach Anspruch 1 oder 2, **dadurch gekennzeichnet, dass** der Sitz (120, 220) einen mit dem Rahmen (118, 218) in Berührung stehenden Stützabschnitt (122, 222) aufweist, und der Stützabschnitt (122, 222) die Einheit (160, 260) in der Vorwärts-und Rückwärtsrichtung des Motorrads (100, 200) überlappt.

4. Motorrad nach einem der Ansprüche 1 bis 3, **dadurch gekennzeichnet, dass** der Sitz (220) einen mit dem Rahmen (218) in Berührung stehenden Stützabschnitt (222) aufweist, und der Stützabschnitt (222) die Einheit (260) in einer vertikalen Richtung des Motorrads (200) überlappt.

5. Motorrad nach mindestens einem der Ansprüche 1 bis 4, **dadurch gekennzeichnet, dass** der Rahmen (118, 218, 418) einen sich in Querrichtung des Motorrads (100, 200, 400) erstreckenden Kopplungsrahmen (141, 241, 441) aufweist, der die Seitenrahmen (140, 240, 440) verbindet.

6. Motorrad nach Anspruch 5, **dadurch gekennzeichnet, dass** der Sitzbefestigungsabschnitt (142, 2411, 442, 443) am Kopplungsrahmen (141, 241, 441) vorgesehen ist.

7. Motorrad nach mindestens einem der Ansprüche 1 bis 6, **dadurch gekennzeichnet, dass** die Einheit (360) den Sitzbefestigungsabschnitt (343) in der Vorwärts- und Rückwärtsrichtung des Motorrads (300) überlappt.

8. Motorrad nach mindestens einem der Ansprüche 1 bis 7, **dadurch gekennzeichnet, dass** die Einheit (160, 460) den Sitzbefestigungsabschnitt (142, 442, 443) in einer Querrichtung des Motorrades (100, 400) überlappt.

9. Motorrad nach mindestens einem der Ansprüche 1 bis 8, **dadurch gekennzeichnet, dass** die Einheit (460) den Sitzbefestigungsabschnitt (442, 443) in einer vertikalen Richtung des Motorrades (400) überlappt.

10. Motorrad nach mindestens einem der Ansprüche 1 bis 9, **dadurch gekennzeichnet, dass** unter der Einheit (160, 260, 360) ein Hinterrad (114, 214, 314) vorgesehen ist, und eine Karosserieabdeckung (130, 230, 330) zwischen dem Hinterrad (114, 214, 314) und der Einheit (160, 260, 360) vorgesehen ist und ein unteres Ende aufweist, das sich in einer Seitenansicht nach hinten und nach oben erstreckt.

11. Motorrad nach mindestens einem der Ansprüche 1 bis 10, **dadurch gekennzeichnet, dass** die Einheit (260, 460) und der Sitz (220, 420) in einer Seitenansicht einander überlappen.

## Revendications

1. Motocyclette, comprenant :
un cadre (118, 218, 318, 418) ayant des cadres latéraux droit et gauche (140, 240, 340, 440) qui s'étendent dans un sens avant-arrière de la motocyclette (100, 200, 300, 400) ; et
un siège (120, 220, 320, 420) prévu au-dessus du cadre (118, 218, 318, 418) et comprenant une partie de fixation (121, 221, 321, 422, 423) disposée pour fixer le siège (120, 220, 320, 420) à une partie de fixation de siège (142, 2411, 343, 442, 443) prévue au niveau du cadre (118, 218, 318, 418),
**caractérisée en ce que**
une unité (160, 260, 360, 460) incluant une antenne configurée pour recevoir un signal de Système de géolocalisation (GPS) est prévue entre les cadres latéraux (140, 240, 340, 440) sous le siège (120, 220, 320, 420) lorsqu'observée en vue de dessus, et dans une position chevauchant les cadres latéraux (140, 240, 340, 440) ou au-dessus des cadres latéraux (140, 240, 340, 440) lorsqu'observée en vue latérale, où la zone de l'unité (160, 260, 360, 460) lorsqu'observée en une vue supérieure est supérieure à celle en vue latérale, et
l'unité (160, 260, 360, 460) est prévue à l'arrière de la partie de fixation de siège (142, 2411, 343, 442, 443) et à l'avant d'une position intermédiaire entre la partie de fixation de siège (142, 2411, 343, 442, 443) et une extrémité arrière du siège (120, 220, 320, 420) dans le sens avant-arrière de la motocyclette (100, 200, 300, 400) ou à l'avant de la partie de fixation de siège (142, 2411, 343, 442, 443) et derrière une position intermédiaire entre la partie de fixation de siège et une extrémité avant du siège.

2. Motocyclette selon la revendication 1, **caractérisée en ce que** le siège (120, 220, 420) comprend une partie soutenue (122, 222, 445) soutenue par contact du cadre (118, 218, 418), et l'une de la partie de fixation (121, 221, 422, 423) et de la partie supportée (122, 222, 445) est positionnée à l'avant de l'unité (160, 260, 460) et l'autre est positionnée derrière l'unité (160, 260, 460).

3. Motocyclette selon la revendication 1 ou 2, **caractérisée en ce que** le siège (120, 220) comprend une partie supportée (122, 222) supportée par contact du cadre (118, 218), et la partie supportée (122, 222) chevauche l'unité (160, 260) dans le sens avant-arrière de la motocyclette (100, 200).

4. Motocyclette selon au moins l'une des revendications 1 à 3, **caractérisée en ce que** le siège (220) comprend une partie supportée (222) supportée par contact du cadre (218), et la partie supportée (222) chevauche l'unité (260) dans un sens vertical de la motocyclette (200).

5. Motocyclette selon au moins l'une des revendications 1 à 4, **caractérisée en ce que** le cadre (118, 218, 418) comprend un cadre de couplage (141, 241, 441) s'étendant dans le sens transversal de la motocyclette (100, 200, 400) et couplant les cadres latéraux (140, 240, 440).

6. Motocyclette selon la revendication 5, **caractérisée en ce que** la partie de fixation de siège (142, 2411, 442, 443) est prévue au niveau du cadre de couplage (141, 241, 441).

7. Motocyclette selon au moins l'une des revendications 1 à 6, **caractérisée en ce que** l'unité (360) chevauche la partie de fixation de siège (343) dans le sens avant-arrière de la motocyclette (300).

8. Motocyclette selon au moins l'une des revendications 1 à 7, **caractérisée en ce que** l'unité (160, 460) chevauche la partie de fixation de siège (142, 442, 443) dans un sens transversal de la motocyclette (100, 400).

9. Motocyclette selon au moins l'une des revendications 1 à 8, **caractérisée en ce que** l'unité (460) chevauche la partie de fixation de siège (442, 443) dans un sens vertical de la motocyclette (400).

10. Motocyclette selon au moins l'une des revendications 1 à 9, **caractérisée en ce qu**'une roue arrière (114, 214, 314) est prévue sous le siège (160, 260, 360), et un capot de carrosserie (130, 230, 330) est prévu entre la roue arrière (114, 214, 314) et l'unité (160, 260, 360) et présente une extrémité inférieure s'étendant vers l'arrière et vers le haut lorsqu'observée en vue latérale.

11. Motocyclette selon au moins l'une des revendications 1 à 10, **caractérisée en ce que** l'unité (260, 460) et le siège (220, 420) se chevauchent l'un l'autre lorsqu'observés en vue latérale.
